(19) Europäisches Patentamt
European Patent Office
Office européen des brevets

(11) **EP 2 840 793 A1**

(12) **EUROPEAN PATENT APPLICATION**
published in accordance with Art. 153(4) EPC

(43) Date of publication:
**25.02.2015 Bulletin 2015/09**

(51) Int Cl.:
**H04N 7/34** *(0000.00)*

(21) Application number: **13778731.3**

(22) Date of filing: **15.04.2013**

(86) International application number:
**PCT/KR2013/003142**

(87) International publication number:
**WO 2013/157791 (24.10.2013 Gazette 2013/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.04.2012 US 201261624354 P**

(71) Applicant: **Samsung Electronics Co., Ltd.**
**Suwon-si, Gyeonggi-do 443-742 (KR)**

(72) Inventor: **LEE, Tammy**
**Seoul 137-070 (KR)**

(74) Representative: **Jones, Ithel Rhys**
**Appleyard Lees**
**15 Clare Road**
**Halifax, Yorkshire HX1 2HY (GB)**

(54) **METHOD AND APPARATUS FOR DETERMINING REFERENCE IMAGES FOR INTER PREDICTION**

(57) Provided are a method of determining a reference image for inter-prediction, and an inter-prediction method thereof.

The method of determining a reference image includes: determining a slice type of a block; if it is determined that the slice type is a B-slice type capable of uni-directional prediction or bi-directional prediction, determining an inter-prediction direction of the block to be one of a first direction, a second direction, and a bi-direction; if the inter-prediction direction is not the second direction, determining a first direction reference index from a first direction reference picture list as a reference index for the block; and if the inter-prediction direction is not the first direction, determining a second direction reference index from a second direction reference picture list as a reference index for the block.

FIG. 1A

EP 2 840 793 A1

**Description**

TECHNICAL FIELD

The present invention relates to inter-prediction and video encoding and decoding which involve inter-prediction.

BACKGROUND ART

As hardware for reproducing and storing high resolution or high quality video content is being developed and supplied, a need for a video codec for effectively encoding or decoding high resolution or high quality video content has increased. In a conventional video codec, a video is encoded according to a limited encoding method based on a macroblock having a predetermined size.

In a video codec, data quantity is reduced by using a prediction technique using a characteristic that images of a video have a high spatial or temporal correlation. According to the prediction technique, in order to predict a current image by using an adjacent image, image information is recorded by using a temporal or spatial distance between images, a prediction error, and so on.

DETAILED DESCRIPTION OF THE INVENTION

TECHNICAL PROBLEM

The present invention provides a method of determining a reference image for inter-prediction, and an inter-prediction method thereof. The present invention also provides a method of efficiently encoding and transmitting, and receiving and reading reference index information indicating a reference image in a reference picture list.

TECHNICAL SOLUTION

According to an aspect of the present invention, there is provided a method of determining a reference image for inter-prediction, the method including: determining a slice type of a slice including a block; if it is determined that the slice type is a B-slice type capable of uni-directional prediction or bi-directional prediction, determining an inter-prediction direction of the block to be one of a first direction, a second direction, and a bi-direction; if the inter-prediction direction is not the second direction, determining a first direction reference index among a first direction reference picture list to be a reference index for the block; and if the inter-prediction direction is not the first direction, determining that a second direction reference index among a second direction reference picture list is a reference index for the block.

ADVANTAGEOUS EFFECTS

By using a motion prediction apparatus or a motion compensation apparatus for determining a reference image according to the present invention, a reference image for uni-directional prediction and bi-directional prediction may be determined via simpler procedures since a new reference picture list does not need to be formed or a new reference index does not need to be searched for aside from an L0 list and an L1 list even during bi-directional inter-prediction. Also, since symbol coding is not required in a reference picture list combination, a process of transmitting unnecessary reference picture list-related information is omitted, and thus a transmission bit amount may be reduced. Similarly, since a process of parsing the unnecessary reference picture list-related information is omitted, a data parsing process may be shortened.

DESCRIPTION OF THE DRAWINGS

FIG. 1A is a block diagram of an apparatus for determining a reference image, according to an embodiment of the present invention.
FIG. 1B is a flowchart of a method of determining a reference image, according to an embodiment of the present invention.
FIG. 2A is a block diagram of a motion prediction apparatus including an apparatus for determining a reference image, according to an embodiment of the present invention.
FIG. 2B is a flowchart of a motion prediction method according to an embodiment of the present invention.
FIG. 3A is a block diagram of a motion compensation apparatus including an apparatus for determining a reference image, according to an embodiment of the present invention.

FIG. 3B is a flowchart of a motion compensation method according to an embodiment of the present invention.

FIG. 4 illustrates two embodiments of intra-prediction direction information.

FIG. 5 illustrates syntax of a portion of a slice header modified according to an embodiment of the present invention.

FIG. 6 illustrates syntax of a parameter set of a reference picture list combination deleted according to an embodiment of the present invention.

FIG. 7 illustrates syntax of a prediction weight table modified according to an embodiment of the present invention.

FIG. 8 illustrates syntax of a prediction unit region modified according to an embodiment of the present invention.

FIG. 9 illustrates syntax of a picture parameter set according to an embodiment of the present invention.

FIG. 10 illustrates syntax of another portion of the slice header modified according to an embodiment of the present invention.

FIG. 11 is a block diagram of a video encoding apparatus involving video prediction based on coding units according to a tree structure, according to an embodiment of the present invention.

FIG. 12 is a block diagram of a video decoding apparatus involving video prediction based on coding units according to a tree structure, according to an embodiment of the present invention.

FIG. 13 is a diagram illustrating a concept of coding units according to an embodiment of the present invention.

FIG. 14 is a block diagram of an image encoder based on coding units, according to an embodiment of the present invention.

FIG. 15 is a block diagram of an image decoder based on coding units, according to an embodiment of the present invention.

FIG. 16 is a diagram illustrating deeper coding units according to depths, and partitions according to an embodiment of the present invention.

FIG. 17 is a diagram illustrating a relationship between a coding unit and transformation units, according to an embodiment of the present invention.

FIG. 18 is a diagram illustrating encoding information of coding units corresponding to a coded depth, according to an embodiment of the present invention.

FIG. 19 is a diagram of deeper coding units according to depths, according to an embodiment of the present invention.

FIGS. 20, 21, and 22 are diagrams illustrating a relationship between coding units, prediction units, and transformation units, according to an embodiment of the present invention.

FIG. 23 is a diagram illustrating a relationship between a coding unit, a prediction unit, and a transformation unit, according to encoding mode information of Table 1.

FIG. 24 is a diagram of a physical structure of a disc in which a program is stored, according to an embodiment of the present invention.

FIG. 25 is a diagram of a disc drive for recording and reading a program by using a disc;

FIG. 26 is a diagram of an overall structure of a content supply system for providing a content distribution service.

FIGS. 27 and 28 are diagrams respectively of an external structure and an internal structure of a mobile phone to which a video encoding method and a video decoding method are applied, according to an embodiment of the present invention.

FIG. 29 is a diagram of a digital broadcast system to which a communication system is applied, according to an embodiment of the present invention.

FIG. 30 is a diagram illustrating a network structure of a cloud computing system using a video encoding apparatus and a video decoding apparatus, according to an embodiment of the present invention.

## BEST MODE

According to an aspect of the present invention, there is provided a method of determining a reference image for inter-prediction, the method including: determining a slice type of a slice including a block; if it is determined that the slice type is a B-slice type capable of uni-directional prediction or bi-directional prediction, determining an inter-prediction direction of the block to be one of a first direction, a second direction, and a bi-direction; if the inter-prediction direction is not the second direction, determining a first direction reference index among a first direction reference picture list to be a reference index for the block; and if the inter-prediction direction is not the first direction, determining that a second direction reference index among a second direction reference picture list is a reference index for the block.

If the inter-prediction direction is the bi-directional prediction, the first direct reference index may be determined from the first direction reference picture list and the second direction reference index may be determined from the second direction reference picture list.

The method may further include: determining inter-prediction mode information indicating that the inter-prediction direction is in two bits; selecting one of four context model indexes based on a depth of a coding unit of a current block, for a context model of a first bin from among two bins corresponding to the inter-prediction mode information in two bits; and selecting one context model index independently from another symbol, for a context model of a second bin from among the two bins, wherein the first bin may indicate whether the inter-prediction direction is a uni-direction or a bi-direction, and the second bin may indicate whether the uni-direction is the first direction or the second direction.

The method may further include determining whether a picture including a collocated block exists in the first direction reference picture list, if a picture including the slice is capable of using a temporal motion vector predictor and the slice type is a B-slice type.

According to another aspect of the present invention, there is provided an apparatus for determining a reference image, the apparatus including: an inter-prediction direction determiner that determines a slice type of a slice including a block, and if the slice type is a B-slice type capable of uni-directional prediction or bi-directional prediction determines an inter-prediction direction of the block to be one of a first direction, a second direction, and a bi-direction; and a reference index determiner that determines a first direction reference index from a first direction reference picture list as a reference index for the block if the inter-prediction direction is not the second direction, and determines a second direction reference index from a second direction reference picture list as a reference index for the block if the inter-prediction direction is not the first direction.

According to another aspect of the present invention, there is provided a computer-readable recording medium having recorded thereon a program for executing the method of determining a reference image.

MODE OF THE INVENTION

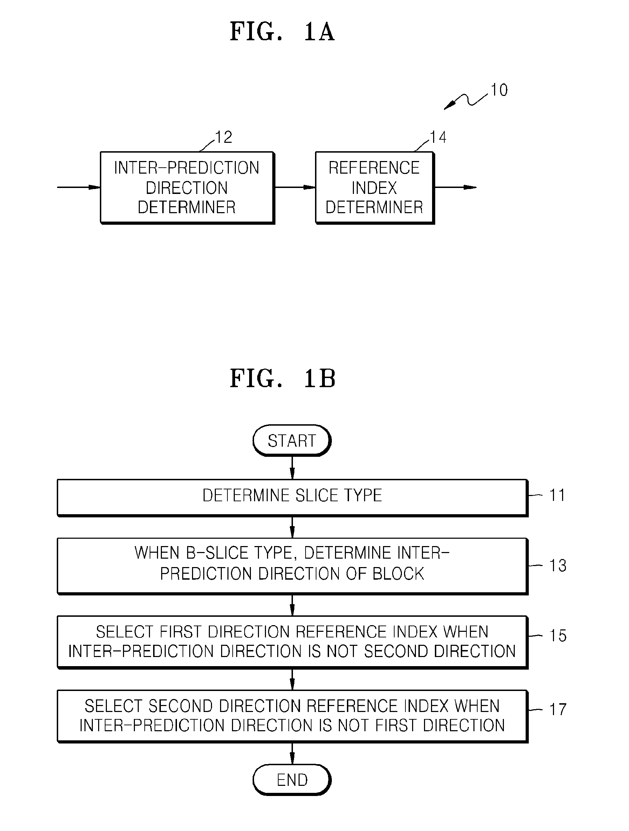

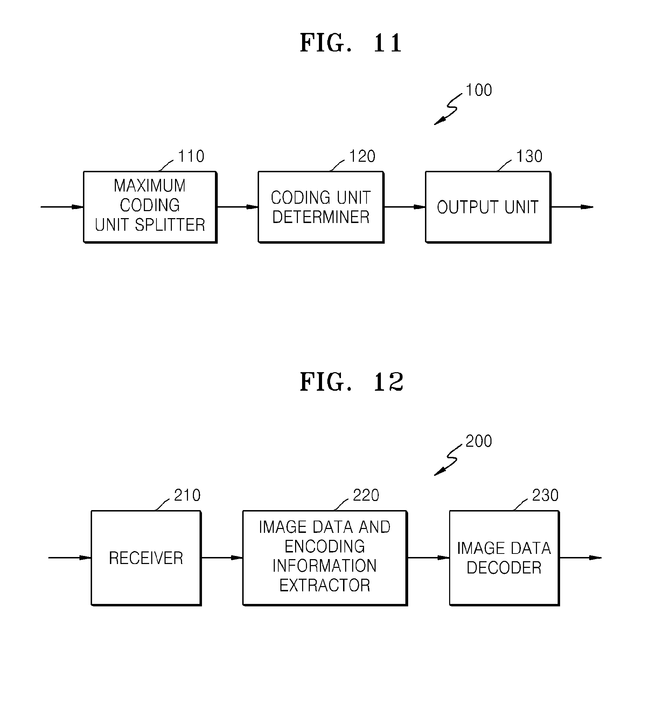

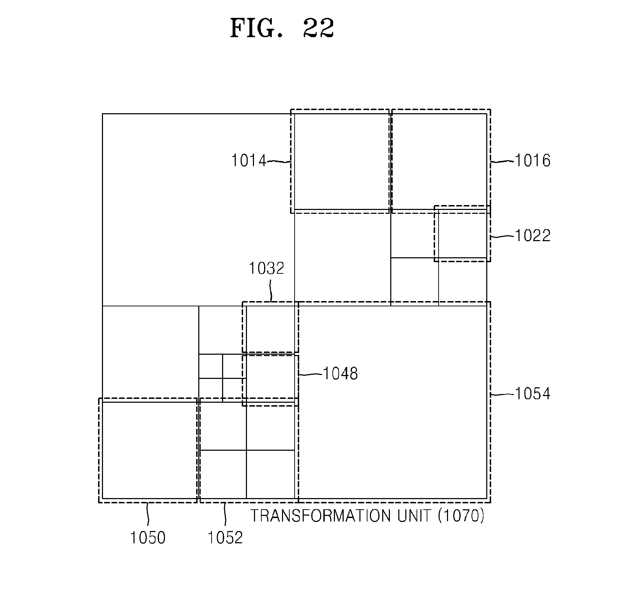

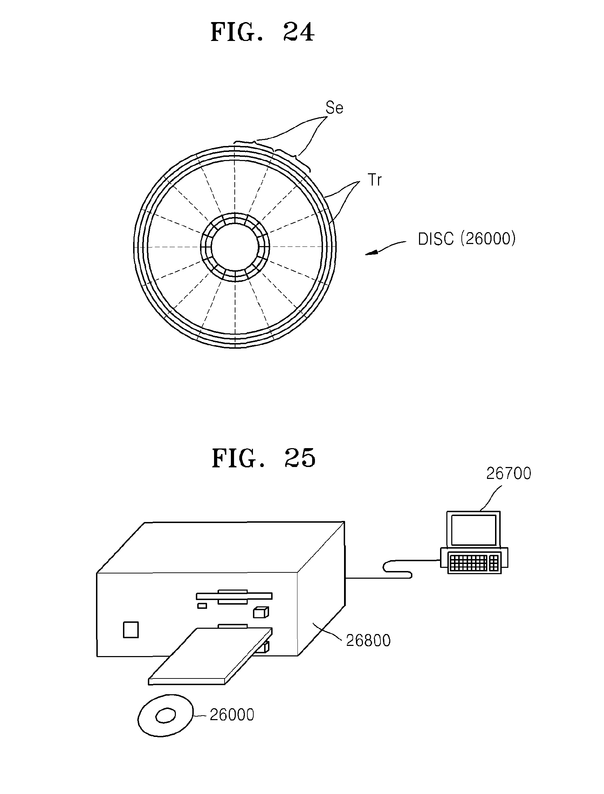

Hereinafter, a method and apparatus for determining a reference image capable of uni-directional prediction or bi-directional prediction, corresponding motion prediction method and apparatus, and corresponding motion compensation method and apparatus will be described with reference to FIGS. 1A through 10 according to embodiments of the present invention. Also, video encoding and decoding apparatuses and video encoding and decoding methods based on coding units according to a tree structure will be described with reference to FIGS. 11 through 23 according to embodiments of the present invention. Also, various embodiments to which a video encoding method and a video decoding apparatus are applicable according to embodiments will be described with reference to FIGS. 24 through 30. Hereinafter, an 'image' may denote a still image, a moving image of a video, or a video itself.

FIG. 1A is a block diagram of an apparatus 10 for determining a reference image, according to an embodiment. FIG. 1B is a flowchart of a method of determining a reference image, according to an embodiment of the present invention.

The apparatus 10 according to an embodiment includes an inter-prediction direction determiner 12 and a reference index determiner 14.

The apparatus 10 may also include a central processor (not shown) for controlling the inter-prediction direction determiner 12 and the reference index determiner 14. Alternatively, the inter-prediction direction determiner 12 and the reference index determiner 14 may be operated by individual processors (not shown), and the apparatus 10 may operate as the individual processors systematically operate with each other. Alternatively, the inter-prediction direction determiner 12 and the reference index determiner 14 may be controlled according to a control of an external processor (not shown) of the apparatus 10 according to an embodiment.

The apparatus 10 according to an embodiment may include at least one data storage unit (not shown) that stores input and output data of the reference picture list determiner 12 and the inter-predictor 14. The apparatus 10 may also include a memory controller (not shown) for managing data input and output of the data storage unit (not shown).

The apparatus 10 determines a reference image used for temporal prediction with respect to images of a video. The apparatus 10 may determine prediction information indicating a position difference between a current image and a reference image, a residue, etc. Accordingly, image information may be recorded by using the prediction information instead of entire data of an image.

According to temporal prediction encoding, a current image may be predicted by referring to a previous image and a subsequent image according to a reproduction time. Images that are encoded or restored prior to the current image according to an encoding order or restoration order regardless of the reproduction time may be referred to for prediction encoding of the current image. The current image and the reference image may be image data units, for example, pictures, frames, fields, or slices.

For fast calculation of inter-prediction, the apparatus 10 according to an embodiment may split the current image into a plurality of blocks and perform inter-prediction on the blocks. In other words, one of the plurality of blocks split from the current image may be used as the reference image to perform inter-prediction on the current block.

A reference picture lists may be divided into an L0 list and an L1 list based on a reference direction. For example, a reference picture list for forward prediction of a P-slice type image may include the L0 list for list 0 prediction. A reference picture list for a B-slice type image capable of bi-prediction including forward prediction, backward prediction, and bi-directional prediction, may include not only the L0 list but also the L1 list for list 1 prediction.

Each of the L0 list and the L1 list may include an index indicating at least one reference image, and reference order information. A default number of active reference images assigned to a reference picture list may be pre-limited.

However, the number of reference images or a reference order of referring to reference images may be altered for each image as occasion demands. Thus, the apparatus 10 may set information about a default number of active reference images of a reference picture list, information about a change in the number of reference images, information about a change in reference images, and information about a change in a reference order.

The inter-prediction direction determiner 12 according to an embodiment may determine whether an image to be referred to for inter-prediction of the current image precedes (forward direction) the current image or follows (backward direction) the current image. When the reference image is determined for the current image, the reference image may be determined from at least any one reference picture list from among the L0 list and the L1 list based on a direction of the reference image.

The reference picture list may include information about the reference images and the reference order of the reference images. For example, the L0 list may primarily include an index for a reference image for forward prediction, and the L1 list may primarily include an index for a reference image for backward prediction. However, the L0 and L1 lists are not limited to include only reference information respectively for forward prediction and backward prediction.

The apparatus 10 according to an embodiment may determine a reference order of reference images assigned to each reference picture list. For example, the reference order may be determined in such a manner that a reference image from among reference images assigned to a reference picture list and which is adjacent to a current image based on a display order is referred to first.

The apparatus 10 according to an embodiment may set reference picture list-related attributes, such as a default number of active reference images assigned to a reference picture list and changes in the reference picture list.

According to an embodiment, attributes related to the changes in the reference picture list may include a method of changing the number of reference images, a method changing reference images assigned to the reference picture list, and a method of changing a reference order.

The inter-prediction direction determiner 12 according to an embodiment may determine a slice type of a slice including a block, and determine an inter-prediction direction based on the slice type.

If the slice is a B-slice type capable of uni-directional prediction or bi-directional prediction, the inter-prediction direction determiner 12 according to an embodiment may determine the inter-prediction direction of the block to be one of a first direction, a second direction, and a bi-direction. The first direction and the second direction may respectively be a forward direction and a backward direction.

The reference index determiner 14 according to an embodiment may determine a reference index indicating a reference image from a reference picture list, based on the inter-prediction direction.

For example, the reference index determiner 14 may determine a first direction reference index from a first direction reference picture list or a second direction reference index from a second direction reference picture list, as a reference index for the block. The first direction reference picture list and the second direction reference picture list may respectively denote the L0 list and the L1 list.

Hereinafter, a process of determining, by the apparatus 10 according to an embodiment, a reference image for inter-prediction will be described with reference to FIG. 1B.

In operation 11, the inter-prediction direction determiner 12 may determine a slice type of a slice including a block. In operation 13, if a current slice type is a B-slice type, the inter-prediction direction determiner 12 may determine an inter-prediction direction of the block to be one of a first direction, a second direction, and a bi-direction.

In operation 15, if the inter-prediction direction determined by the inter-prediction direction determiner 12 is not the second direction, the reference index determiner 14 may determine a first direction reference index among a first direction reference picture list, as a reference index for the block. In other words, if the inter-prediction direction is the first direction or the bi-direction, at least one reference index may be selected from the first direction reference picture list.

If the inter-prediction direction determined by the inter-prediction direction determiner 12 is the second direction, the first direction reference index is not determined and operation 17 is performed.

In operation 17, if the inter-prediction direction determined by the inter-prediction direction determiner 12 is not the first direction, the reference index determiner 14 may determine a second direction reference index among a second direction reference picture list, as the reference index for the block. In other words, if the inter-prediction direction is the second direction or the bi-direction, at least one reference index may be selected from the second direction reference picture list.

If the inter-prediction direction determined by the inter-prediction direction determiner 12 is the first direction, the second direction reference index is not determined and operation 17 is performed.

Accordingly, if the inter-prediction direction is the bi-direction, at least one first direction reference index is determined among the first direction reference picture list and at least one second direction reference index is determined among the second direction reference picture list through operations 15 and 17.

In operation 15, the reference index determiner 14 may determine the first direction reference index and also determine a difference value of a first motion vector indicating a reference block in a reference image indicated by the first direction reference index.

In operation 17, the reference index determiner 14 may determine the second direction reference index and also determine a difference value of a second motion vector indicating a reference block in a reference image indicated by the second direction reference index.

A reference index may indicate an order between reference images in a reference picture list, and a motion vector may denote a position of a reference block in a predetermined reference image. Thus, a reference image and a reference block for inter-prediction of a block may be determined based on a reference index and a motion vector.

The apparatus 10 according to an embodiment may use inter-prediction mode information in 2 bits, as information indicating an inter-prediction direction.

In order to perform context-based entropy-encoding or entropy-decoding with respect to the inter-prediction mode information in 2 bits according to an embodiment, a context model including probability information of a symbol indicating the inter-prediction mode information may be used. In detail, since a context model is determined per bin of a symbol, a context model may be determined for each of two bins respectively corresponding to the 2 bits of the inter-prediction mode information.

A first bin of bins of the inter-prediction mode information according to an embodiment may indicate whether the inter-prediction direction is a uni-direction or a bi-direction. If the first bin indicates bi-directional inter-prediction, a second bin may not be defined. However, if the first bin indicates uni-directional inter-prediction, the second bin may indicate whether a uni-direction is the first direction or the second direction.

In detail, in cases of a P-slice type and a B-slice type, the inter-prediction mode information may commonly indicate whether inter-prediction is forward prediction (L0 prediction) or backward direction (L1 prediction). In an inter-prediction mode according to an embodiment, a type of a prediction direction may be limited according to a size of a block. For example, if a sum of width and height of a block is 12, as in when a size of a block is 4x8 or 8x4, bi-directional inter-prediction may not be allowed even for a B-slice type block. Thus, if the sum of width and height of the block is 12, inter-prediction mode information of the B-slice type block may indicate forward prediction or backward prediction.

If the sum of width and height is not 12, inter-prediction mode information indicating any one of forward prediction, backward prediction, and bi-directional prediction may be determined for the B-slice type block.

The apparatus 10 according to an embodiment may entropy-encode (decode) the inter-prediction mode information by using one selected from at least one context mode. A context model index may be assigned for each of selectable context models.

The apparatus 10 according to an embodiment may select one of four context model indexes, for a context model of the first bin of the inter-prediction mode information. Also, the apparatus 10 may select one context model index for a context model of the second bin of the inter-prediction mode information.

In detail, one of the four context model indexes may be selected based on a depth of a coding unit of a current block, for the context model of the first bin among the two bins corresponding to the inter-prediction mode information in 2 bits. One context model index may be independently determined without having to consider another symbol, for the context model of the second bin among the two bins.

The apparatus 10 according to another embodiment may select one of three context model indexes, for the context model of the first bin of the inter-prediction mode information. The apparatus 10 may select three context model indexes, for the context model of the second bin of the inter-prediction mode information.

Alternatively, if an L0 list and an L1 list match each other, the second bin of the inter-prediction mode information may not be encoded and may be inferred to be 0. If the L0 list and the L1 list match each other, the first bin of the inter-prediction mode information may indicate uni-directional prediction, and as a result, L0 uni-directional prediction may be determined.

Alternatively, the context model index for the first bin of the inter-prediction mode information of the current block may be encoded by using a value of a first bin of inter-prediction mode information of a left, top, or top left neighboring block of the current block.

Alternatively, the context model index for the first bin of the inter-prediction mode information of the current block may be encoded by using a depth value of a current coding unit. A depth of a coding unit denotes a number of times a maximum coding unit is split to a current coding unit.

Alternatively, the context model index for the first bin of the inter-prediction mode information of the current block may be set and encoded in a constant.

Alternatively, the context model index for the second bin of the inter-prediction mode information of the current block may be encoded by using a value of a second bin of the inter-prediction mode information of the left, top, or top left neighboring block of the current block.

Alternatively, the context model index for the second bin of the inter-prediction mode information of the current block may be encoded by using the depth value of the current coding unit.

Alternatively, the context model index for the second bin of the inter-prediction mode information of the current block may be set and encoded in a constant.

The apparatus 10 according to another embodiment may determine whether a temporal motion vector predictor (tmvp) is usable in a picture including a slice. Also, the apparatus 10 according to another embodiment may determine whether a picture including a collocated block exists in the first direction reference picture list for a B-slice type current slice.

A collocated block is a not an actual reference block located in an actual reference picture, but is a block located in a collocated picture that is a picture different from the actual reference picture. A position of a reference block in a reference picture and a position of a collocated block in a collocated picture are the same. Accordingly, a reference block may be determined by estimating a motion vector indicating the reference block by referring to a motion vector indicating a collocated block.

The apparatus 10 according to another embodiment may determine the picture including the collocated block among the first direction reference picture list, with respect to a B-slice type slice from among slices in the picture capable of using the tmvp. Accordingly, a reference block of a current block may be determined by using the collocated block included in the picture selected among the first direction reference picture list.

The apparatus 10 according to another embodiment may determine index information of a picture including a collocated block among a predetermined reference picture list, when a current slice is capable of using a tmvp. In other words, when it is pre-determined that a picture including a collocated block exists in a predetermined direction reference picture list with respect to a B-slice type slice, index information (a collocated reference index) including the collocated block may be determined among the predetermined direction reference picture list. Alternatively, since only a reference picture for forward prediction is allowed for a P-slice type slice, a reference picture corresponding to a collocated reference index may be determined from the first direction reference picture list.

When a motion vector predictor of a current block is determined by using a motion vector of a collocated block, a motion vector of the current block is determined by using the motion vector predictor of the current block, and a reference block of the current block may be determined by using the determined motion vector.

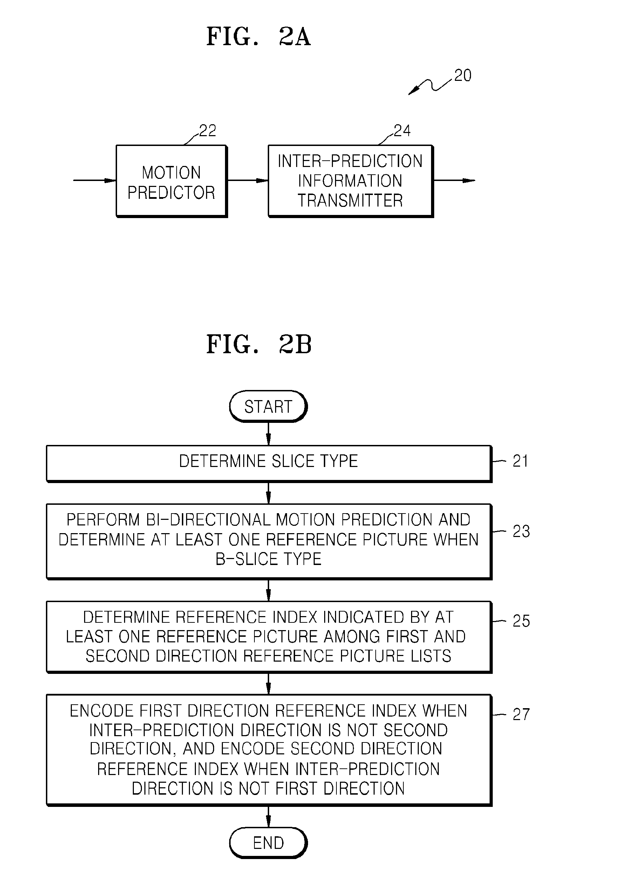

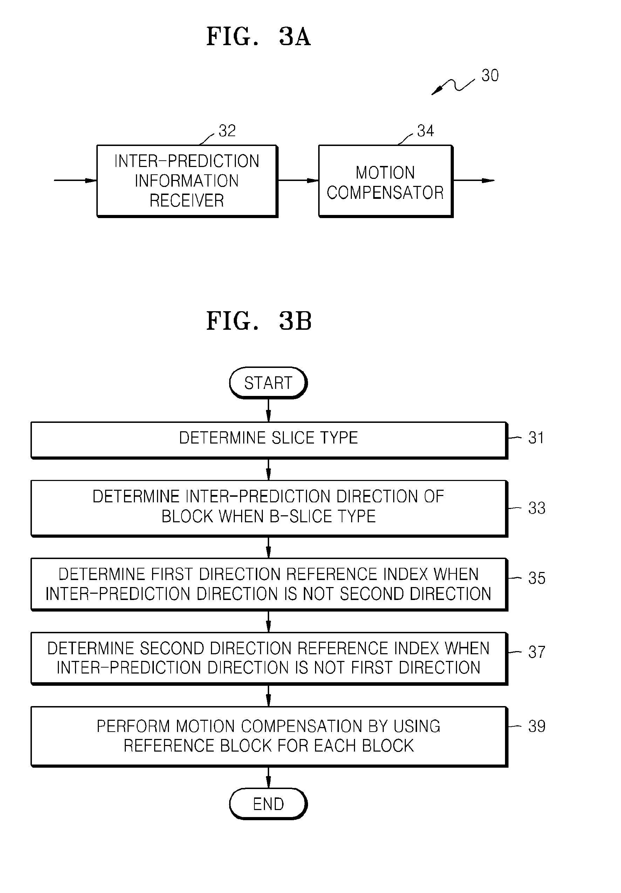

Hereinafter, a process of performing motion prediction by using the reference picture determined by the apparatus 10 according to an embodiment will be described with reference to FIGS. 2A and 2B. Also, a process of performing motion compensation by using the reference picture determined by the apparatus 10 according to an embodiment will be described with reference to FIGS. 3A and 3B.

FIG. 2A is a block diagram of a motion prediction apparatus 20 corresponding to the apparatus 10, according to an embodiment of the present invention. FIG. 2B is a flowchart of a motion prediction method performing a method of determining a reference image, according to an embodiment of the present invention.

The motion prediction apparatus 20 according to an embodiment includes a motion predictor 12 and an inter-prediction information transmitter 24.

In operation 21, the motion predictor 12 according to an embodiment may determine a slice type of a current block. Based on whether the slice type of the current block is a P- or B-slice type, it may be determined whether an inter-prediction direction of the current block is a uni-direction or a bi-direction.

In operation 23, the motion predictor 12 according to an embodiment may perform motion prediction on a block by using reference pictures included in at least one of a first direction reference picture list and a second direction reference picture list. The motion predictor 24according to an embodiment may determine a reference picture for the current block from among reference images assigned to a reference picture list determined by the reference picture list determiner 12.

The motion predictor 12 according to an embodiment detects a block having a least error with respect to the current block by determining a similarity between blocks of the determined reference image and the current block of the current image. In other words, a most similar block is detected via motion prediction, and the detected most similar block may be determined as a reference block. Also, a picture including the detected reference block may be determined as a reference picture. When at least one reference block most similar to the current block is determined, at least one reference picture may be determined.

As the reference block and the reference picture are determined by the motion predictor 12 in operation 23, information indicating the reference picture, for example, a number of the reference picture in images of a reference picture list, i.e., a reference index may be determined in operation 25.

The motion predictor 12 according to an embodiment may determine the reference index indicating the reference picture determined in operation 21, among at least one of the first and second direction reference picture lists. In other words, if the reference picture belongs to the first direction reference picture list, a first direction reference index may be determined. If the reference picture belongs to the second direction reference picture list, a second direction reference index may be determined.

In operation 27, the inter-prediction information transmitter 24 according to an embodiment may encode reference index information.

The inter-prediction information transmitter 24 may encode the first direction reference index when the reference picture determined by the motion predictor 12 does not belong to the second direction reference list. Also, the inter-prediction information transmitter 24 may encode the second direction reference index when the reference picture determined by the motion predictor 12 does not belong to the first direction reference list.

Also, the motion predictor 12 may determine a motion vector indicating the reference block from among blocks of the reference image. The motion predictor 24 may determine a residue between the reference block and the current block. Accordingly, the inter-prediction information transmitter 24 may encode the motion vector indicating the reference picture, and the residue, an inter-prediction direction, and the reference index. Encoded prediction information may be transmitted after being inserted into a block region of a bitstream.

The inter-prediction information transmitter 24 according to an embodiment may insert slice type information indicating the slice type into a slice header for the current slice among the bitstream.

The current block on which inter-prediction is performed may be referred to as a prediction unit.

The inter-prediction mode information transmitter 24 may insert inter-prediction mode information indicating any one of first direction prediction, second direction prediction, and bi-directional prediction into a prediction unit region including prediction information of a block from among the bitstream.

Also, if the inter-prediction mode information does not indicate the second direction prediction, the inter-prediction mode information transmitter 24 may insert first direction reference index information and difference value information of a first motion vector into the prediction unit region. If tmvp usability is approved in a picture parameter set, information about which motion vector predictor is a first direction mvp in a current prediction unit may also be inserted into the prediction unit region.

Information about a motion vector predictor, according to an embodiment may be expressed in an index indicating one of a predetermined number of motion vector predictors. For example, since information about a motion vector predictor indicating one of two motion vector predictors may be expressed in an index of 0 or 1, a flag form may be used. Accordingly, a motion vector predictor index of an L0 list for a current prediction unit may be inserted into a prediction unit region. Also, if inter-prediction mode information does not indicate first direction prediction, the inter-prediction mode information transmitter 24 may insert second direction reference index information and difference value information of a second motion vector into the prediction unit region. If tmvp usability is approved in a picture parameter set, information about which motion vector predictor is a second direction mvp in the current prediction unit may also be inserted into the prediction unit region. A motion vector predictor index of an L0 list for the current prediction unit may be inserted into the prediction unit region.

Accordingly, the inter-prediction mode information transmitter 24 according to an embodiment may insert information generated as results of inter-prediction into the slice header and the prediction unit region, and may transmit the bitstream including the slice header and the prediction unit region.

The inter-prediction mode information transmitter 24 according to another embodiment may insert information indicating usability of a tmvp into a picture parameter set of a picture. If slice type information inserted into the slice header indicates a B-slice type in the picture capable of using the tmvp, the inter-prediction mode information transmitter 24 may insert information indicating whether there is a picture including a collocated block among the first direction reference picture list into the slice header.

Also, the inter-prediction mode information transmitter 24 according to another embodiment may insert collocated reference index information into the slice header regardless of a P-slice type or a B-slice type.

The inter-prediction mode information transmitter 24 according to an embodiment may entropy-encode inter-prediction mode information by using a context model determined for each bin of the inter-prediction mode information. The inter-prediction mode information transmitter 24 may transmit a bit string generated by performing entropy-encoding not only on various symbols generated as results of inter-prediction, i.e., the inter-prediction mode information, but also on difference value information of a motion vector and reference index information.

FIG. 3A is a block diagram of a motion compensation apparatus 30 corresponding to the apparatus 10 for determining a reference image, according to an embodiment of the present invention. FIG. 3B is a flowchart of a motion compensation method performing a method of determining a reference image, according to an embodiment of the present invention.

The motion compensation apparatus 30 according to an embodiment includes an inter-prediction mode information receiver 32 and a motion compensator 34.

Generally, motion prediction and motion compensation may be performed during a video encoding process. Also, motion compensation may be performed during a video decoding process. In order to generate a restored image identical to an original image via motion compensation after motion prediction performed on the original image, the motion compensation is performed by using reference information and a residue generated via the motion prediction. Accordingly, in order to encode and decode an inter-mode block during the video encoding process and the video decoding process, the reference information (a reference index and a motion vector) and information about the residue are transferred.

In operation 31, the inter-prediction mode information receiver 32 according to an embodiment may parse slice type information from a slice header among a received bitstream. A slice type of a current slice may be determined by using the parsed slice type information.

In operation 33, the inter-prediction mode information receiver 32 according to an embodiment may parse inter-prediction mode information indicating an inter-prediction direction of a current block (prediction unit) from a prediction unit region, among the received bitstream. Accordingly, the motion compensator 34 may read from the parsed inter-prediction mode information which one of a first direction prediction, a second direction prediction, and a bi-directional prediction is indicated by inter-prediction mode information of the current block.

The inter-prediction mode information receiver 34 according to an embodiment may restore the inter-prediction mode information by performing entropy-decoding using a context model determined per bin, on a bit string including the inter-prediction mode information among the bitstream.

The inter-prediction mode information receiver 32 according to an embodiment may parse first direction reference index information and difference value information of a first motion vector, from a prediction unit region including prediction information of a block among the received bitstream. Also, second direction reference index information and difference value information of a second motion vector may be parsed from the prediction unit region.

Accordingly, in operation 35, the inter-prediction mode information receiver 32 according to an embodiment may parse first direction reference index information from the prediction unit region when an inter-prediction direction read from the inter-prediction mode information is not a second direction. A first direction reference picture may be determined among a first direction reference picture list, based on the parsed first direction reference index information. If the inter-prediction direction is not the second direction, the difference value information of the first motion vector may be parsed together with the first direction reference index, from the prediction unit region. If tmvp usability is approved in a picture parameter set, information about whether a first direction mvp is used in a current prediction unit may be parsed from the prediction unit region.

Also, in operation 37, the inter-prediction mode information receiver 32 according to an embodiment may parse second direction reference index information from the prediction unit region, if the inter-prediction direction read from the inter-prediction mode information is not a first direction. A second direction reference picture may be determined among a second direction reference picture list, based on the parsed second direction reference index information. If the inter-prediction direction is not the first direction, the difference value information of the second motion vector may be parsed together with the second direction reference index, from the prediction unit region. If tmvp usability is approved in the picture parameter set, information about whether a second direction mvp is used in the current prediction unit may be parsed from the prediction unit region.

In other words, if the inter-prediction direction read from the inter-prediction mode information is a bi-direction, the inter-prediction mode information receiver 32 according to an embodiment may read a bi-directional reference index, a motion vector difference value, and tmvp use information by parsing the first direction reference index information and the difference value information of the first motion vector, and the second direction reference index information and the difference value information of the second motion vector from the prediction unit region.

The inter-prediction mode information receiver 32 according to another embodiment may parse information indicating usability of a tmvp from the picture parameter set with respect to the current picture among the received bitstream. If the tmvp is usable, the inter-prediction mode information receiver 32 according to another embodiment may parse information from the slice header, the information indicating whether a picture including a collocated picture exists in the first direction reference picture list.

Also, if the tmvp is usable, the inter-prediction mode information receiver 32 according to another embodiment may parse index information of a picture including a collocated block among a predetermined reference picture list, from the slice header. Collocated reference index information may be parsed from the slice header regardless of whether a slice is a P-slice type or a B-slice type.

The inter-prediction mode information receiver 32 according to an embodiment may parse reference index information, a difference value of a motion vector, and a residue according to inter-mode blocks included in a slice, from the received bitstream.

In operation 39, the motion compensator 34 according to an embodiment may perform motion compensation after determining a reference picture per block of a current image.

The motion compensator 34 according to an embodiment may determine a reference image indicated by a reference index from among a reference picture list. A motion vector of a current block may be determined by using a previous motion vector and a difference value of the motion vector, and a reference block indicated by the motion vector may be determined from among blocks of a reference image. The motion compensator 34 may restore the current block by compensating the reference block for a residue.

Accordingly, the motion compensator 34 according to an embodiment may perform motion compensation by using the reference picture determined per block, the motion vector, and the residue, and generate a restored image.

The motion prediction apparatus 20 according to an embodiment may be capable of expressing an image by using prediction information instead of entire data of the image, and may thus be used to perform video encoding for video compression encoding so as to reduce the amount of video data.

In detail, the motion prediction apparatus 20 according to an embodiment may be included in or operated interactively with a video encoder that encodes a video based on coding units obtained by spatially splitting an image of the video in order to perform inter-prediction for video encoding. Also, each of the coding units may be split into prediction units and partitions for inter-prediction of the coding units, and inter-prediction may be performed based on the prediction units and the partitions.

Examples of a coding unit according to an embodiment may include not only blocks each having a fixedly determined shape but also coding units according to a tree structure according to an embodiment. Coding units according to a tree structure and prediction units and partitions thereof according to an embodiment are described in detail with reference to FIGS. 11 to 23 below.

The motion prediction apparatus 20 according to an embodiment may output a prediction error, i.e., a residue, with respect to a reference image by performing inter-prediction on image data of image blocks or coding units. The motion prediction apparatus 20 may perform transformation and quantization on the residue to generate a quantized transformation coefficient, perform entropy encoding on symbols, such as the transformation coefficient, reference information, and coding information, and then output a bitstream. The motion prediction apparatus 20 according to an embodiment may also encode and output symbols including L0 list-related information and L1 list-related information, which include information about a reference order or number of images included in each reference picture list, and reference picture list-related information, such as information related to changes of a reference picture list.

The motion prediction apparatus 20 may restore an image in a spatial domain by performing inverse quantization, inverse transformation, and prediction compensation again on the transformation coefficient, and perform in-loop filtering to generate a restored image. In other words, the motion prediction apparatus 20 according to an embodiment may refer to a restored image generated by a video encoder, by using at least one of the L0 list and the L1 list, so as to perform inter-prediction on a current image that is a B-slice. Since the restored image generated as such is used as a reference image for motion prediction of a subsequent input image, the motion prediction apparatus 20 may determine reference information and a residue by performing inter-prediction again on the subsequent input image.

Thus, the motion prediction apparatus 20 may perform video compression encoding via motion prediction.

The motion prediction apparatus 20 according to an embodiment may perform a video encoding operation including motion prediction by being operated interactively with a video encoding processor mounted therein or an external video encoding processor to output a video encoding result. The video encoding processor included in the motion prediction apparatus 20 according to an embodiment may be an additional processor, or a central processing unit (CPU) or a graphic processing unit may drive a video encoding processing module to realize a basic video encoding operation.

Next, a video decoding process will be described.

The motion compensation apparatus 30 according to an embodiment may restore an image by using prediction information instead of entire data of an image, by receiving a compressed bitstream via motion prediction.

The motion compensation apparatus 30 according to an embodiment may parse a reference index indicating a reference picture for a current block, a motion vector, and a residue from a block region of the bitstream.

The motion compensation apparatus 30 according to an embodiment may perform motion compensation for video decoding by being included in, operated in, or operated interactively with a video decoder that decodes a video based on coding units obtained by splitting an image of a video according to spatial domains. Also, a coding unit for motion compensation may include prediction units and partitions, and motion compensation may be performed based on the prediction units and the partitions. As described above, a coding unit according to an embodiment may include not only blocks each having a fixedly determined shape but also coding units according to a tree structure according to an embodiment.

The motion compensation apparatus 30 according to an embodiment may parse symbols of a transformation coefficient, reference information, encoding information, etc. by performing entropy decoding on the received bitstream. The motion compensation apparatus 30 according to an embodiment may parse symbols including reference picture list-related information.

The motion compensation apparatus 30 according to an embodiment may restore a residue in a spatial domain by performing inverse quantization and inverse transformation on the parsed transformation coefficient according to transformation units.

The motion compensation apparatus 30 according to an embodiment may restore an image in a spatial domain via motion compensation for compensating a reference block for a residue according to partitions. According to an embodiment, the motion compensation apparatus 30 may determine a reference image and a reference block indicated by a motion vector in the reference image by referring to a pre-restored image included in at least one of an L0 list and an L1 list so as to perform motion compensation on a B-slice current partition. By adding a residue to the reference block determined as such, the restored block may be generated.

The motion compensation apparatus 30 according to an embodiment may minimize an error between the restored block and an original block by performing deblocking filtering and sample adaptive offset (SAO) filtering on the restored block in the spatial domain. The restored block may be used as a reference block for prediction of a subsequent block.

Accordingly, video compression decoding may be realized via motion compensation of the motion compensation apparatus 30.

The motion compensation apparatus 30 according to an embodiment may perform a video decoding operation including motion compensation by being operated interactively with a video decoding processor mounted therein or an external video decoding processor to output a video decoding result. The video decoding processor included in the motion compensation apparatus 30 according to an embodiment may be an additional processor, or a CPU or a graphic processing unit may drive a video decoding processing module to realize a basic video decoding operation.

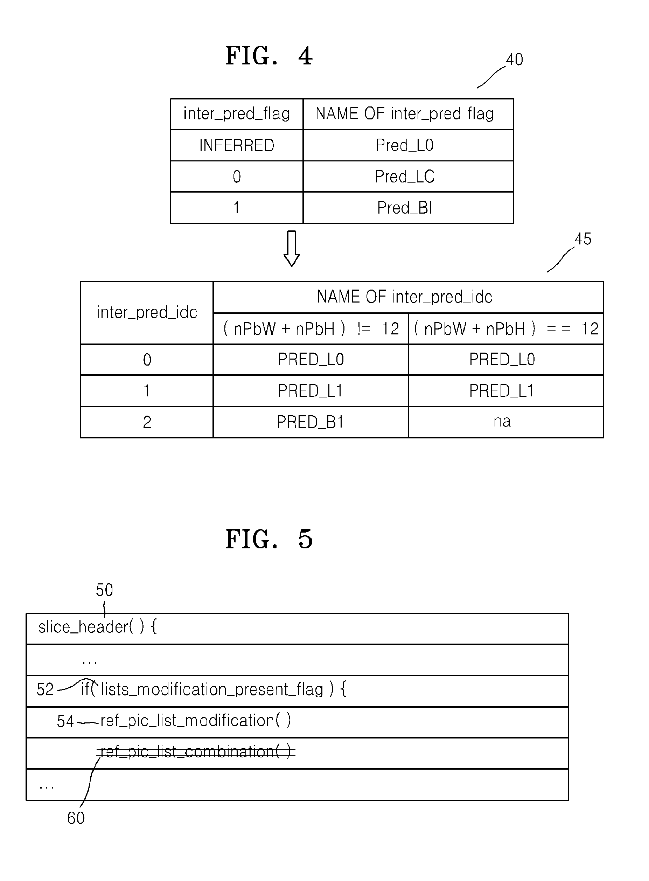

Hereinafter, syntax of inter-prediction related information, which is transmitted by the motion prediction apparatus 20 and parsed by the motion compensation apparatus 30, according to an embodiment, will be described with reference to FIGS. 4 through 10.

FIG. 4 illustrates two embodiments of intra-prediction direction information.

Inter-prediction mode information inter_pred_flag 40 according to a first embodiment is not separately defined in case of a P-slice type. In the case of a P-slice type, even when the inter-prediction mode information 40 is not defined, it may be inferred that inter-prediction is forward prediction using an L0 list. However, only in the case of a B-slice type, the inter-prediction mode information inter_pred_flag 40 may indicate whether inter-prediction is bi-prediction direction Pred_LC or bi-directional prediction Pred_BI according to a reference picture list combination.

According to the inter-prediction mode information 40 of the first embodiment, even when an inter-prediction direction is a bi-prediction direction in the case of a B-slice type, a reference picture is actually an image included in one of an L0 list and an L1 list. However, since reference index information provided based on the inter-prediction mode information 40 in the bi-prediction direction is a reference index on the reference picture list combination, inconvenience of combining reference picture lists by using the L0 list and the L1 list and then rearranging indexes thereof may increase.

Inter-prediction mode information inter_pred_idc 45 according to a second embodiment does not use a reference index according to a reference picture list combination. Thus, an L0 list and an L1 list may not be combined.

The inter_pred_idc 45 may indicate whether an inter-prediction direction of a B-slice type block is an L0 prediction direction Pred_L0 or an L0 prediction direction Pred_L1. Since only forward prediction PRED_L0 is allowed in a P-slice, the inter_pred_idc 45 is not used. In other words, the inter_pred_idc 45 may not be determined to indicate an inter-prediction direction of a P-slice type. Accordingly, inter-prediction of a P-slice type may be interred to be forward prediction even if the inter_pred_idc 45 does not separately exist.

The inter-prediction mode information inter_pred_idc 45 according to the second embodiment may be determined only for inter-prediction of a B-slice type prediction unit. In detail, nPbW and nPbH respectively denote a width and a height of a current prediction unit. Accordingly, if a sum (nPbW+nPbH) of the width and the height of the prediction unit is 12, for example, if a size of the prediction unit is 4x8 or 8x4, bi-directional inter-prediction may not be allowed even for the B-slice type prediction unit. If the sum of the width and the height is not 12, inter-prediction mode information 45 indicating any one of forward prediction Pred_L0, backward prediction Pred_L1, and bi-directional prediction Pred_BI may be determined for the B-slice type prediction unit.

Accordingly, if a sum of a width and a height of B-slice type current prediction unit is not 12, the motion prediction apparatus 20 may insert the inter-prediction mode information 45 indicating any one of forward prediction Pred_L0, backward prediction Pred_L1, and bi-directional prediction Pred_BI into a prediction unit region among a bitstream. On the other hand, if a sum of a width and a height of a current prediction unit is 12, the inter-prediction mode information 45 indicating any one of forward prediction Pred_L0 and backward prediction Pred_L1 may be read from a prediction unit region among a bitstream.

The motion compensation apparatus 30 may not parse the inter_pred_idc 45 with respect to a P-slice type prediction unit. Inter-prediction of a P-slice type may be inferred to be forward prediction even when the inter_pred_idc 45 does not separately exist.

Accordingly, if the inter-prediction mode information 45 according to the second embodiment is parsed from the prediction unit region of the bitstream and the sum of the width and the height of the current prediction unit is not 12, the motion compensation apparatus 30 may read any one of the forward prediction Pred_L0, the backward prediction Pred_L1, and the bi-directional prediction Pred_BI from the inter-prediction mode information 45. However, if the sum of the width and the height of the current prediction unit is 12, any one of the forward prediction Pred_L0 and the backward prediction Pred_L1 may be read from the inter-prediction mode information 45.

Consequently, according to the inter-prediction mode information 45 of the second embodiment, a new reference picture list is not formed or a new reference index is not searched for even for bi-directional prediction, and thus a reference image may be determined via a simpler procedure.

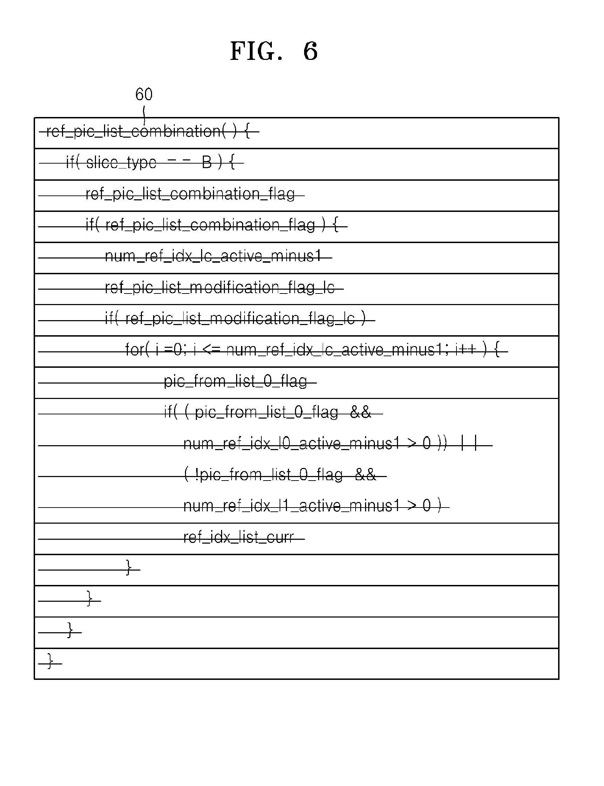

FIG. 5 illustrates syntax of a portion of a slice header 50 modified according to an embodiment of the present invention. FIG. 6 illustrates syntax of a parameter set of a reference picture list combination deleted according to an embodiment of the present invention.

'slice_header()' 50 indicates a slice header. 'ref_pic_list_combination()' 60 indicates a parameter set related to a reference picture list combination. 'ref_pic_list_modification()' 54 indicates a parameter set related to reference picture list modification.

The motion prediction apparatus 20 may encode slice-related parameters by including various types of information required to decode a current slice to 'slice_header()' 50. The motion compensation apparatus 30 may parse the slice-related parameters from 'slice_header()' 50 so as to read the various types of information required to decode the current slice.

A reference picture list may be determined per slice, according to slice types.

If 'lists_modification_present_flag' 52 included in a sequence parameter set indicates that it is possible to modify reference picture lists determined in a current sequence, the motion prediction apparatus 20 according to an embodiment may insert 'ref_pic_iist_modification()' 54 including detailed information about a method of modifying a reference picture list into 'slice_header()' 60.

Since a reference picture list combination is not used even for Bi-slice type bi-directional prediction according to the inter-prediction mode information 45 according to the second embodiment, 'ref_pic_list_combination()' 60 may not be inserted into 'slice_header()' 50.

If 'lists_modification_present_flag' 52 read from the sequence parameter set indicates that it is possible to modify the reference picture lists determined in the current sequence, the motion compensation apparatus 30 according to an embodiment may parse 'ref_pic_list_modification()' 54 including detailed information about a method of modifying a reference picture list from 'slice_header()' 50.

Also, since the reference picture list combination is not used even for B-slice type bi-directional prediction according to the inter-prediction mode information 45 according to the second embodiment, 'ref_pic_list_combination()' 60 is not parsed from 'slice_header()' 50.

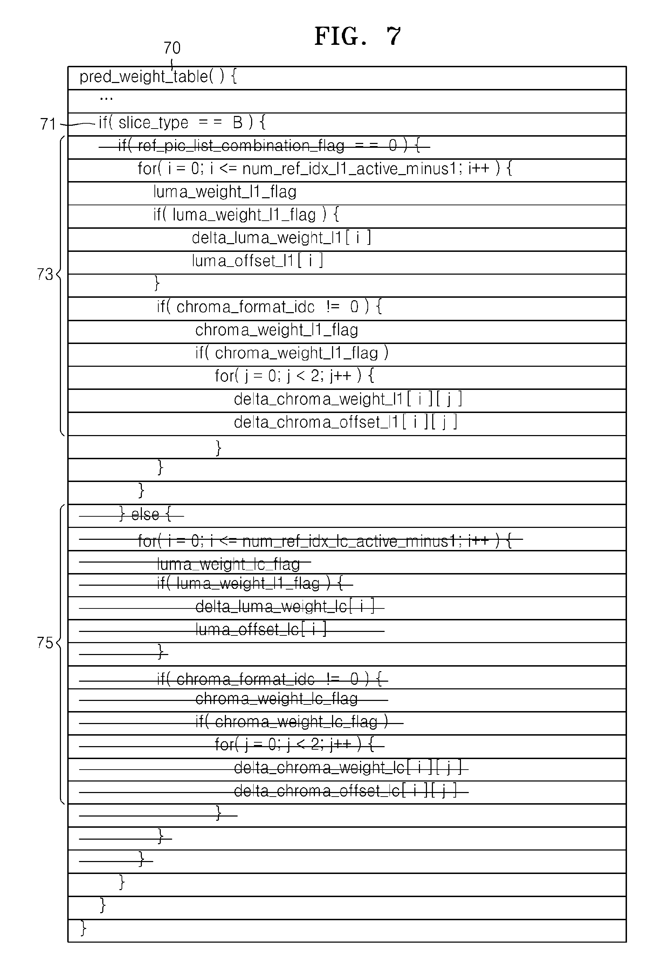

FIG. 7 illustrates syntax of a prediction weight table 70 modified according to an embodiment of the present invention.

The prediction weight table 70 according to an embodiment includes information related to a weight applied to a prediction related parameter according to luma components and chroma components in a current slice.

In detail, if a current slice type is a B-slice type 71, weight information 73 of a prediction related parameter for L1 prediction may be determined. However, since a reference picture list combination is not used even for B-slice type bi-directional prediction according to the inter-prediction mode information 45 of the second embodiment, the motion prediction apparatus 20 according to an embodiment may include the weight information 73 of the prediction-related parameter for L1 prediction in the prediction weight table 70 without having to perform a process of determining whether there is a current reference picture list combination. Also, weight information 75 of a prediction related parameter using a reference picture list combination may not be further included in the prediction weight table 70.

Similarly, the motion compensation apparatus 30 according to an embodiment may parse the prediction weight table 70 from a slice header of a bitstream. Also, when a current slice is a B-slice type, the weight information 73 of the prediction related parameter for L1 prediction may be parsed from the prediction weight table 70 without having to determine whether there is a current reference picture list combination. Also, a process of parsing the weight information 75 of the prediction related parameter using a reference picture list combination from the prediction weight table 70 may also be omitted.

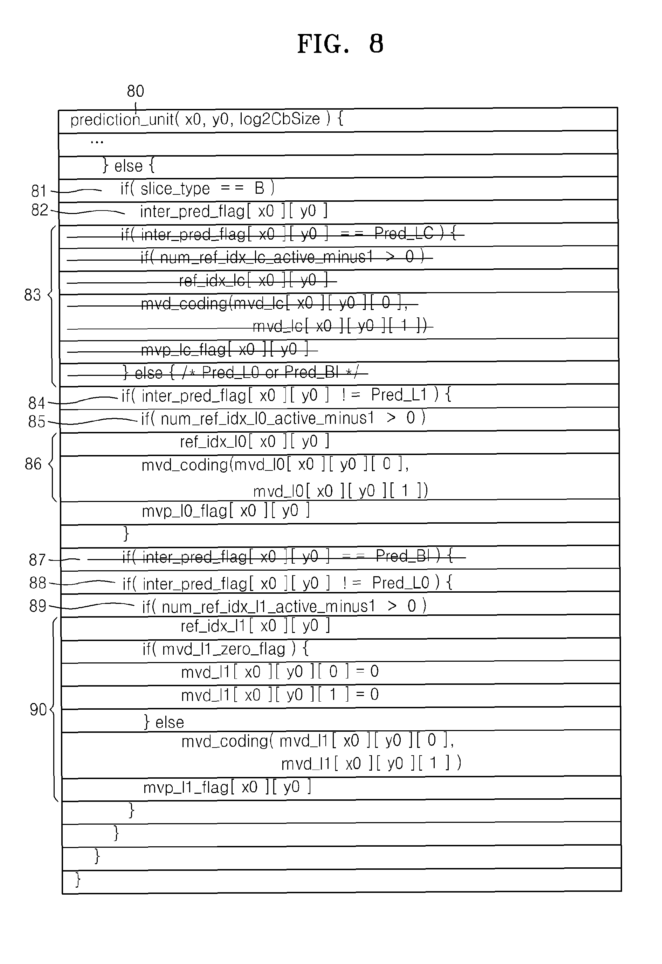

FIG. 8 illustrates syntax of a prediction unit region 80 modified according to an embodiment of the present invention.

The prediction unit region 80 according to an embodiment includes prediction information including reference indexes 'ref_idx_l0' and 'ref_idx_l1' and motion vector related information 'mvd_l0', 'mvd_l1', 'mvp_l0_flag', and 'mvd_l1_flag', which are determined according to a prediction direction in a current prediction unit.

If a current slice type 'slice_type' is a B-slice type 81, the motion prediction apparatus 20 according to an embodiment may insert an inter-prediction direction 'inter_pred_flag' 82 of the current prediction unit into the prediction unit region 80. However, since bi-directional prediction using a reference picture list combination is not used also for a B-slice type according to the inter-prediction mode information 45 according to the second embodiment, the motion prediction apparatus 20 according to an embodiment may not insert prediction information 83 related to a reference picture list combination into the prediction unit region 80. The motion prediction apparatus 20 according to an embodiment may not insert the prediction information 83 related to a reference picture list combination into the prediction unit region 80.

If inter-prediction of the current prediction unit is not L1 prediction as in syntax 84 and an active reference image exists in an L0 list as in syntax 85, the motion prediction apparatus 20 according to an embodiment may include prediction information 86 according to L0 prediction to the prediction unit region 80. Also, if the inter-prediction is not L0 prediction as in syntax 88 and an active reference image exists in an L1 list as in syntax 89 without having to determine whether the inter-prediction of the current prediction unit is bi-directional prediction as in syntax 87, prediction information 90 according to L1 prediction may be included in the prediction unit region 80.

If the current slice type 'slice_type' is the B-slice type 81, the motion compensation apparatus 30 according to an embodiment may parse the inter-prediction direction 'inter_pred_flag' 82 of the current prediction unit from the prediction unit region 80. However, the motion compensation apparatus 30 according to an embodiment may not parse the prediction information 83 related to a reference picture list combination from the prediction unit region 80.

If the inter-prediction of the current prediction unit is not L1 prediction as in syntax 84 and the active reference image exists in the L1 list as in syntax 85, the motion compensation apparatus 30 according to an embodiment may parse the prediction information 86 according to L0 prediction from the prediction unit region 80. Also, if the inter-prediction is not L0 prediction as in syntax 88 and the active reference image exists in the L1 list as in syntax 89 without having to determine whether the inter-prediction of the current prediction unit is bi-directional prediction as in syntax 87, the prediction information 90 according to L1 prediction may be parsed from the prediction unit region 80.

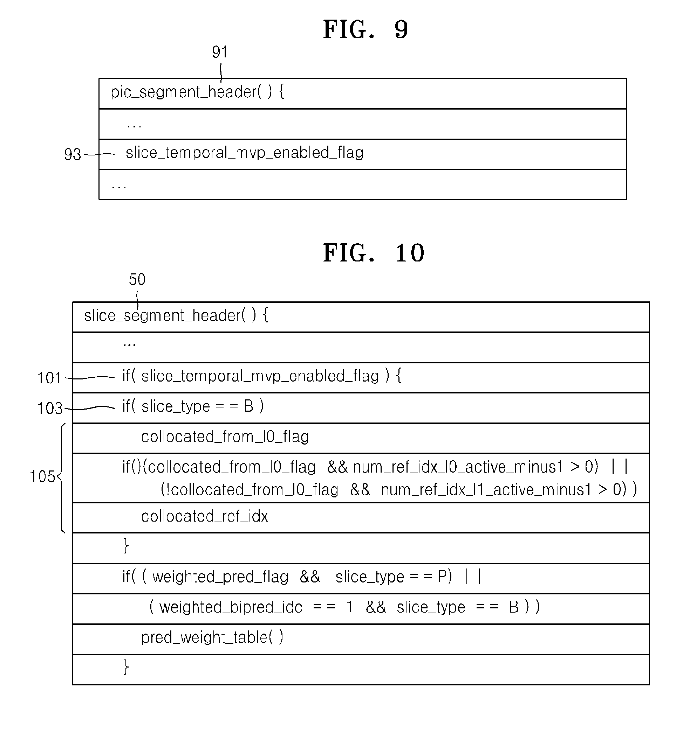

FIG. 9 illustrates syntax of a picture parameter set according to an embodiment of the present invention. The slice header may correspond to a slice segment header of an independent slice segment.

The motion prediction apparatus 20 according to an embodiment may determine whether time motion vector predictor tmvp is usable in a current picture. Accordingly, the motion prediction apparatus 20 according to an embodiment may insert tmvp usability information 'slice_temporal_mvp_enabled_flag' 93 into a slice header 91. The temporal motion vector predictor according to an embodiment may be used to predict a motion vector of a current block by using a motion vector of a collocated image. Since the tmvp usability information 93 is included according to the slice header 91, usability of a tmvp may be determined per slice.

The usability information 'slice_temporal_mvp_enabled_flag' 93 of a temporal motion vector predictor indicates whether the temvp is usable for inter-prediction in a current picture. The tmvp may be used to determine a current motion vector by using a motion vector in a reference picture. If the 'slice_temporal_mvp_enabled_flag' 93 is approved in a picture, an mvp may be used in at least one slice included in the current picture.

Similarly, the motion compensation apparatus 30 according to an embodiment may parse the usability information 'slice_temporal_mvp_enabled_flag' 93 of a temporal motion vector predictor from the slice header 91. It is determined whether the current motion vector is predictable by using the temporal motion vector predictor in the current picture by reading the parsed usability information 93 of the temporal motion vector predictor. Since the tmvp usability information 93 is parsed per the slice header 91, usability of a tmvp may be determined per slice.

FIG. 10 illustrates syntax of another portion of the slice header modified according to an embodiment of the present invention.

It may be determined whether a collocated reference picture is usable in a current slice, based on the tmvp usability information 'slice_temporal_mvp_enabled_flag' 93 used in the slice header 91 of FIG. 9.

If a temporal motion vector predictor is usable in a current sequence as in syntax 101, the motion prediction apparatus 20 according to another embodiment may insert collocated picture related information 105 for a current slice into the current slice header 91.

For example, if a current slice type 'slice_type' is a B-slice type 103, the collocated picture related information 105 may include information 'colloated_from_l0_flag' indicating whether there is a collocated block among reference pictures included in an L0 list, to the current slice header 91. Also, reference index information 'collocated_ref_idx' of a collocated picture may be included regardless of a P-slice type or a B-slice type. For example, the reference index information 'collocated_ref_idx' may indicate an index of a current reference image from among reference images positioned in a pre-determined direction.

If it is determined that a temporal motion vector predictor is usable in a current sequence parameter set 91 as in syntax 101, the motion compensation apparatus 30 according to another embodiment may parse the collocated picture related information 105 for the current slice from the current slice header 91. If the current slice type 'slice_type' is a B-slice type 103, information indicating whether there is a collocated block among reference pictures included in an L0 list and also reference index information of a collocated picture may be parsed from the collocated picture related information 105.

In detail, if a temporal motion vector predictor is used and a slice is a B-slice type, a direction of a collocated block to be used from 'collocated_from_l0_flag' may be determined.

Also, if a temporal motion vector predictor is used, which reference picture is used to determine a collocated block from among reference images positioned in a pre-determined direction may be read from 'collocated_ref_idx'. 'collocated_ref_idx' may also be used in case of a P-slice type.

Since 'collocated_from_l0_flag' indicating whether there is a collocated image in a predetermined direction and the reference index information 'collocated _ref_idx' of the collocated picture are included in the current slice header only when the temporal motion vector predictor is used, sameness information related to the collocated picture may be signaled only when the temporal motion vector predictor is used in the current slice.

As described above, a reference image for uni-directional prediction and bi-directional prediction may be determined via a simpler procedure since a new reference picture list is not required to be formed aside from an L0 list and an L1 list or a new reference index is not required to be searched for even for bi-directional inter-prediction, by using at least one of the apparatus 10, the motion prediction apparatus 20, and the motion compensation apparatus 30 according to various embodiments. Also, since symbol coding is not required in a reference picture list combination, a process of transmitting unnecessary reference picture list related information is omitted, and thus a transmission bit amount may be reduced. Similarly, since a process of parsing the unnecessary reference picture list related information is omitted, a data parsing process may also be shortened.

As described above, the apparatus 10, the motion prediction apparatus 20, and the motion compensation apparatus 30 according to various embodiments described above with reference to FIGS. 1A through 10 perform motion prediction and motion compensation according to partitions determined in coding units according to a tree structure. Hereinafter, a video encoding method and a video decoding method based on coding units according to a tree structure, according to embodiments of the present invention, will be described with reference to FIGS. 11 through 23.

FIG. 11 is a block diagram of a video encoding apparatus 100 based on coding units according to a tree structure, according to an embodiment of the present invention.

The video encoding apparatus 100 involving video prediction based on coding units according to a tree structure, according to an embodiment, includes a coding unit determiner 120 and an output unit 130. The coding unit determiner 120 may split a current picture based on a maximum coding unit that is a coding unit having a maximum size for a current picture of an image. If the current picture is larger than the maximum coding unit, image data of the current picture may be split into the at least one maximum coding unit. The maximum coding unit according to an embodiment may be a data unit having a size of 32x32, 64x64, 128x128, 256x256, etc., wherein a shape of the data unit is a square having a width and height in squares of 2.

A coding unit according to an embodiment may be characterized by a maximum size and a depth. The depth denotes the number of times the coding unit is spatially split from the maximum coding unit, and as the depth deepens, deeper coding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split, may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the deeper coding units according to depths, according to the maximum coding unit of the current picture, and selecting a depth having the least encoding error. The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth to a lower depth by measuring an encoding error of the image data of the each coding unit, separately. Accordingly, even when image data is included in one maximum coding unit, the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 according to an embodiment may determine coding units according to a tree structure included in the current maximum coding unit. The 'coding units according to a tree structure' according to an embodiment include coding units corresponding to a depth determined to be the coded depth, from among all deeper coding units included in the current maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment is an index related to the number of splitting times from a maximum coding unit to a minimum coding unit. A first maximum depth according to an embodiment may denote the total number of splitting times from the maximum coding unit to the minimum coding unit. A second maximum depth according to an embodiment may denote the total number of depth levels from the maximum coding unit to the minimum coding unit. For example, if a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3, and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding, including the prediction encoding and the transformation, is performed on all of the deeper coding units generated as the depth deepens. For convenience of description, the prediction encoding and the transformation will now be described based on a coding unit of a current depth, in at least one maximum coding unit.

The video encoding apparatus 100 according to an embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit of a coded depth according to an embodiment, i.e., based on a coding unit that is no longer split. Hereinafter, the coding unit that is no longer split and becomes a basis for prediction encoding will now be referred to as a 'prediction unit'. A partition obtained by splitting the prediction unit may include a data unit obtained by splitting at least one of a height and a width of the prediction unit. A partition is a data unit where a prediction unit of a coding unit is split, and a prediction unit may be a partition having the same size as a coding unit.

For example, if a coding unit of 2Nx2N (where N is a positive integer) is no longer split and becomes a prediction unit of 2Nx2N, and a size of a partition may be 2Nx2N, 2NxN, Nx2N, or NxN. Examples of a partition type according to an embodiment include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 according to an embodiment may also perform the transformation on the image data in a coding unit based not only on the coding unit for encoding the image data, but also based on a data unit that is different from the coding unit. In order to perform the transformation in the coding unit, the transformation may be performed based on a transformation unit having a size smaller than or equal to the coding unit. For example, the transformation unit may include a data unit for an intra mode and a transformation unit for an inter mode.

The transformation unit in the coding unit may be recursively split into smaller sized transformation units in the similar manner as the coding unit according to the tree structure, according to an embodiment. Thus, residual data in the coding unit may be divided according to the transformation units according to the tree structure, according to transformation depths.

A transformation depth indicating the number of splitting times to reach the transformation unit by splitting the height and width of the coding unit may also be set in the transformation unit according to an embodiment. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit according to the tree structure may be set according to the transformation depths.

Encoding information according to a coded depth requires not only information about the coded depth, but also about prediction related information and transformation related information. Accordingly, the coding unit determiner 120 not only determines a coded depth having a least encoding error, but also determines a partition type of partitions obtained by splitting a prediction unit, a prediction mode according to prediction units, and a size of a transformation unit for transformation.

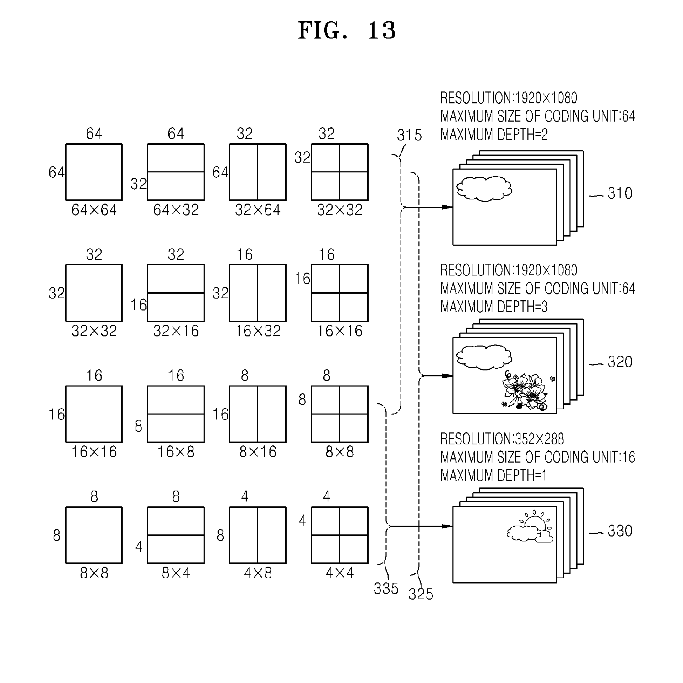

Coding units according to a tree structure in a maximum coding unit and methods of determining a prediction unit/partition, and a transformation unit, according to embodiments of the present invention, will be described in detail later with reference to FIGS. 13 through 23.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, the current coding unit is encoded in a coding unit of the current depth, and thus the split information of the current depth may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the data of the maximum coding unit may be different according to locations since the data is hierarchically split according to depths, and thus information about the coded depth and the encoding mode may be set for the data.

Accordingly, the output unit 130 according to an embodiment may assign encoding information about a corresponding coded depth and an encoding mode to at least one of the coding unit, the prediction unit, and a minimum unit included in the maximum coding unit.

The minimum unit according to an embodiment is a square data unit obtained by splitting the minimum coding unit constituting the lowermost depth by 4. Alternatively, the minimum unit according to an embodiment may be a maximum square data unit that may be included in all of the coding units, prediction units, partition units, and transformation units included in the maximum coding unit.

For example, the encoding information output by the output unit 130 may be classified into encoding information according to deeper coding units, and encoding information according to prediction units. The encoding information according to the deeper coding units may include prediction mode information and partition size information. The encoding information transmitted according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Also, information about a maximum size of the transformation unit permitted with respect to a current video, and information about a minimum size of the transformation unit may also be output through a header of a bitstream, a sequence parameter set, or a picture parameter set. The output unit 130 may encode and output reference information related to prediction, prediction information, and slice type information.

According to a most simple embodiment of the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the current coding unit having a size of 2Nx2N may include a maximum of 4 of the coding units of lower depth having a size of NxN.

Accordingly, the video encoding apparatus 100 may form the coding units according to the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformation methods, an optimum encoding mode may be determined considering characteristics of the coding unit of various image sizes.

Thus, if an image having a very high resolution or a very large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using a video encoding apparatus according to an embodiment, image compression efficiency may be increased since a coding unit is adjusted while considering characteristics of an image while increasing a maximum size of a coding unit while considering a size of the image.

The video encoding apparatus 100 may perform inter-prediction by determining a reference picture list, according to the motion prediction method described above with reference to FIGS. 2A and 2B.

The coding unit determiner 120 may determine a prediction unit for inter-prediction according to coding units according to a tree structure per maximum coding unit, and perform inter-prediction per prediction unit and partition thereof.

The coding unit determiner 120 determines a reference image used for temporal prediction with respect to images of a video. The apparatus 10 determines prediction information indicating a temporal distance between a current image and an adjacent image, and a residue. Accordingly, image information may be recorded by using the prediction information instead of entire data of an image.

The coding unit determiner 120 according to an embodiment may determine whether an image to be referred to for inter-prediction of the current image precedes the current image (first direction) or follows the current image (second direction). While determining a reference image of the current image, the reference image may be determined from at least any one reference picture list from among an L0 list and an L1 list based on a direction of the reference image.

The coding unit determiner 120 according to an embodiment may determine a reference order of reference images assigned to each reference picture list. For example, a reference order may be determined such that a reference image closest to the current image in a display order is first referred to from among the reference images assigned to the reference picture list.

The coding unit determiner 120 according to an embodiment may determine a slice type of a slice including a block, and determine an inter-prediction direction based on the slice type.

If the slice is a B-slice type capable of uni-directional prediction or bi-directional prediction, the coding unit determiner 120 according to an embodiment may determine the inter-prediction direction of the block to be one of a first direction, a second direction, and a bi-direction. The first and second directions may respectively be forward and backward directions.

The coding unit determiner 120 according to an embodiment may determine a reference index indicating the reference image on the reference picture list, based on the inter-prediction direction.

For example, the coding unit determiner 120 may determine a first direction reference index from a first direction reference picture list, as a reference index for the block, and determine a second direction reference index from a second direction reference picture list. The first and second reference picture lists may respectively denote an L0 list and an L1 list.

The coding unit determiner 120 determines prediction information indicating the reference index, together with the temporal distance between the current image and the adjacent image, and the residue.

The output unit 130 according to an embodiment may encode and output inter-prediction mode information indicating the inter-prediction direction of the block, the reference index, a motion vector, etc.

FIG. 12 is a block diagram of a video decoding apparatus 200 based on coding units according to a tree structure, according to an embodiment of the present invention.

The video decoding apparatus 200 that involves video prediction based on coding units according to a tree structure, according to an embodiment, includes a receiver 210, an image data and encoding information extractor 220, and an image data decoder 230. For convenience of description, the video decoding apparatus 200 that involves video prediction based on coding units according to a tree structure, according to an embodiment, will now be abbreviated to the 'video decoding apparatus 200'.

Definitions of various terms such as a coding unit, a depth, a prediction unit, a transformation unit, and information about various encoding modes for decoding operations of the video decoding apparatus 200 according to an embodiment are identical to those described with reference to FIG. 8 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts information about a coded depth and an encoding mode for the coding units according to a tree structure according to each maximum coding unit, from the parsed bitstream. The extracted information about the coded depth and the encoding mode is output to the image data decoder 230. In other words, the image data in a bit string is split into the maximum coding unit so that the image data decoder 230 decodes the image data for each maximum coding unit.

The information about the coded depth and the encoding mode according to the maximum coding unit may be set for least one piece of coded depth information, and information about an encoding mode according to coded depths may include information about a partition type of a corresponding coding unit, about a prediction mode, and a size of a transformation unit. Also, splitting information according to depths may be extracted as the coded depth information.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100 according to an embodiment, repeatedly performs encoding for each deeper coding unit according to depths according to each maximum coding unit. Accordingly, the video decoding apparatus 200 may restore an image by decoding data according to an encoding method that generates the minimum encoding error.

Since encoding information about the coded depth and the encoding mode, according to an embodiment, may be assigned to a predetermined data unit from among a corresponding coding unit, a prediction unit, and a minimum unit, the image data and encoding information extractor 220 may extract the information about the coded depth and the encoding mode according to the predetermined data units. If information about a coded depth and encoding mode of a corresponding maximum coding unit is recorded according to predetermined data units, the predetermined data units to which the same information about the coded depth and the encoding mode is assigned may be inferred to be the data units included in the same maximum coding unit.

The image data decoder 230 restores the current picture by decoding the image data in each maximum coding unit based on the information about the coded depth and the encoding mode according to the maximum coding units. In other words, the image data decoder 230 may decode the encoded image data based on the read partition type, the read prediction mode, and the read transformation unit for each coding unit from among the coding units according to the tree structure included in each maximum coding unit. A decoding process may include a prediction including intra prediction and motion compensation, and an inverse transformation.

The image data decoder 230 may perform intra prediction or motion compensation according to a partition and a prediction mode of each coding unit, based on the partition type information and prediction mode information of the prediction unit of the coding unit according to coded depths.

In addition, the image data decoder 230 may read transformation unit information according to a tree structure for each coding unit so as to perform inverse transformation based on transformation units for each coding unit, for inverse transformation for each maximum coding unit. Via the inverse transformation, a pixel value of a spatial domain of the coding unit may be restored.

The image data decoder 230 may determine a coded depth of a current maximum coding unit by using split information according to depths. If the split information indicates that image data is no longer split in the current depth, the current depth is a coded depth. Accordingly, the image data decoder 230 may decode coding unit of the current depth with respect to image data in the current maximum coding unit by using the information about the partition type of the prediction unit, the prediction mode, and the size of the transformation unit.

In other words, data units containing the encoding information including the same split information may be gathered by observing the encoding information set for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

Also, the video decoding apparatus 200 may perform motion compensation by determining a reference index among a reference picture list, according to the motion compensation method described above with reference to FIGS. 3A and 3B.

The extractor 210 according to an embodiment may parse inter-prediction mode information indicating an inter-prediction direction of a block, a reference index, and a motion vector from a bitstream.

The image data decoder 230 may determine a prediction unit for motion compensation according to coding units according to a tree structure for each maximum coding unit, and perform motion compensation per prediction unit and partition thereof.

The image data decoder 230 determines a reference image used for temporal prediction with respect to images of a video. The image data decoder 230 may determine whether an image to be referred to for inter-prediction of a current image precedes the current image (first direction) or follows the current image (second direction), based on the inter-prediction mode information. A reference image may be determined from at least any one reference picture list in an L0 list and an L1 list based on a direction of the reference image, while determining the reference image from the current image.

The image data decoder 230 according to an embodiment may determine a slice type of a slice including a block, and determine an inter-prediction direction based on the slice type. If the slice is a B-slice type capable of uni-directional prediction or bi-directional prediction, the image data decoder 230 according to an embodiment may determine the inter-prediction direction of the block to be one of the first direction, the second direction, and a bi-direction. The first and second directions may respectively be forward and backward directions.

The image data decoder 230 according to an embodiment may determine a reference index indicating the reference image from the reference picture list, based on the determined inter-prediction direction.

For example, the image data decoder 230 may determine a first direction reference index from a first direction reference picture list, as the reference index for the block, and determine a second direction reference index from a second direction reference picture list. The first and second direction reference picture lists may respectively denote the L0 and L1 lists.

The image data decoder 230 may determine a reference picture indicated by the reference index from among reference pictures included in the reference picture list, and determine a reference block indicated by a motion vector in the reference picture. The image data decoder 230 may restore the current block by compensating the reference block for a residue.

FIG. 13 is a diagram for describing a concept of coding units according to an embodiment of the present invention.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

A partition for inter-prediction according to an embodiment may not include a partition of 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 13 denotes a total number of splits from a maximum coding unit to a minimum decoding unit.

If a resolution is high or a data amount is large, a maximum size of a coding unit may be relatively large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the video data 310 may include a maximum coding unit having a long axis size of 64, and coding units having long axis sizes of 32 and 16 since depths are deepened to two layers by splitting the maximum coding unit twice. Since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

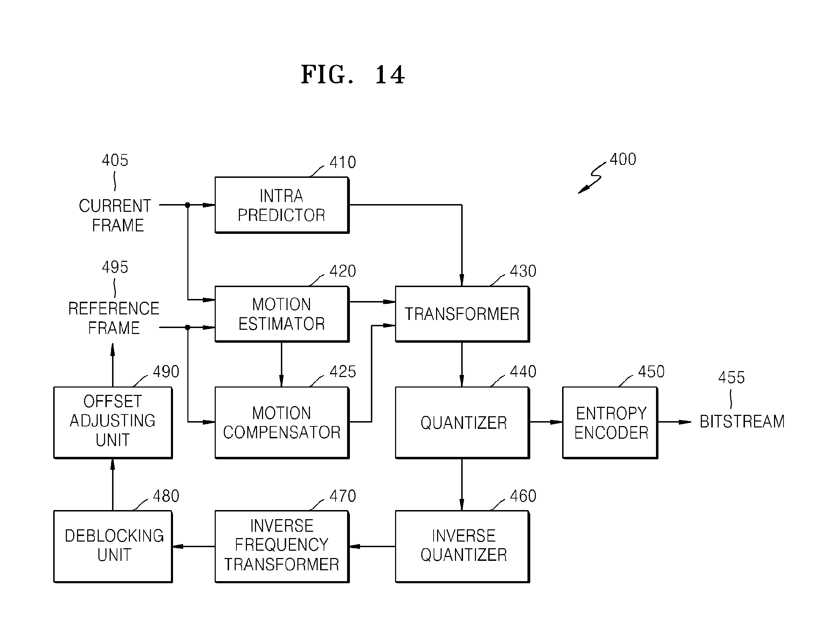

FIG. 14 is a block diagram of an image encoder 400 based on coding units, according to an embodiment of the present invention.

The image encoder 400 according to an embodiment performs operations of the coding unit determiner 120 of the video encoding apparatus 100 to encode image data. In other words, an intra predictor 410 performs intra-prediction on coding units in an intra mode, from among a current frame 405, and a motion estimator 420 and a motion compensator 425 respectively perform inter-estimation and motion compensation by using the current frame 405 and a reference frame 495 in an inter mode.

Data output from the intra predictor 410, the motion estimator 420, and the motion compensator 425 is output as a quantized transformation coefficient through a transformer 430 and a quantizer 440. The quantized transformation coefficient is restored as data in a spatial domain through an inverse quantizer 460 and an inverse transformer 470, and the restored data in the spatial domain is output as the reference frame 495 after being post-processed through a deblocking unit 480 and an offset adjusting unit 490. The quantized transformation coefficient may be output as a bitstream 455 through an entropy encoder 450.

In order for the image encoder 400 to be applied in the video encoding apparatus 100 according to an embodiment, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the offset adjusting unit 490 perform operations based on each coding unit among coding units according to a tree structure while considering the maximum depth of each maximum coding unit.

Specifically, the intra predictor 410, the motion estimator 420, and the motion compensator 425 determine partitions and a prediction mode of each coding unit from among the coding units according to a tree structure while considering the maximum size and the maximum depth of a current maximum coding unit, and the transformer 430 determines the size of the transformation unit in each coding unit from among the coding units according to a tree structure.

The motion estimator 420 and the motion compensator 425 may determine a reference index based on the inter-prediction method described above with reference to FIGS. 1A and 1B, and perform inter-prediction by using a reference picture corresponding to the reference index from among a reference picture list.

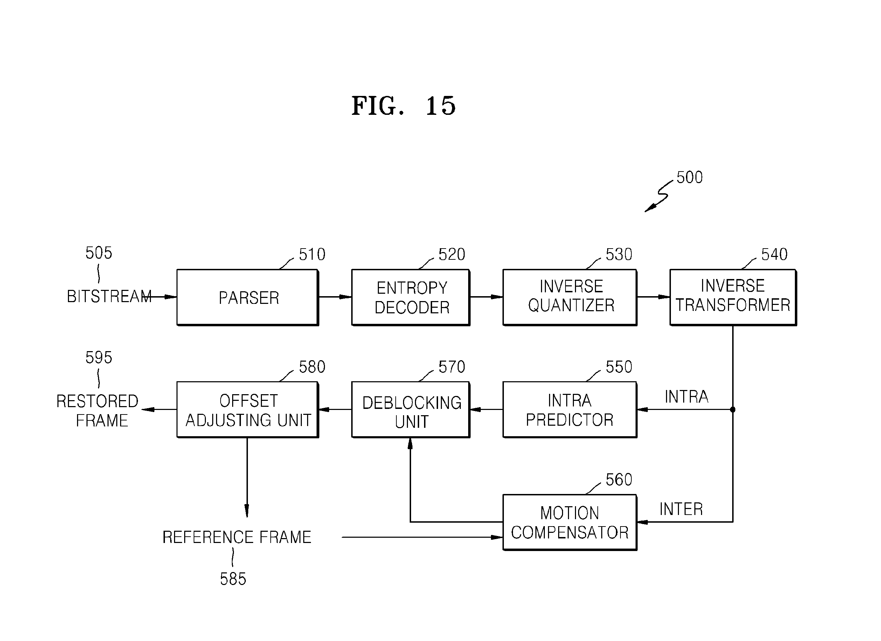

FIG. 15 is a block diagram of an image decoder 500 based on coding units, according to an embodiment of the present invention.

A parser 510 parses encoded image data to be decoded and information about encoding required for decoding from a bitstream 505. The encoded image data is output as inverse quantized data through an entropy decoder 520 and an inverse quantizer 530, and image data in a spatial domain is restored via an inverse transformer 540.

An intra predictor 550 performs intra-prediction on coding units in an intra mode with respect to the image data in the spatial domain, and a motion compensator 560 performs motion compensation on coding units in an inter mode by using a reference frame 585.

The data which passed through the intra predictor 550 and the motion compensator 560 and is in the spatial domain, may be output as a restored frame 595 after being post-processed through a deblocking unit 570 and an offset adjusting unit 580. Also, the data that is post-processed through the deblocking unit 570 and the loop filtering unit 580 may be output as the reference frame 585.

In order to decode the image data in the image data decoder 230 of the video decoding apparatus 200, the image decoder 500 according to an embodiment may perform operations that are performed after the parser 510.

In order for the image decoder 500 to be applied in the video decoding apparatus 200 according to an embodiment, all elements of the image decoder 500, i.e., the parser 510, the entropy decoder 520, the inverse quantizer 530, the inverse transformer 540, the intra predictor 550, the motion compensator 560, the deblocking unit 570, and the offset adjusting unit 580 perform operations based on coding units according to a tree structure for each maximum coding unit.

Specifically, the intra prediction 550 and the motion compensator 560 determine partitions and a prediction mode for each of the coding units according to a tree structure, and the inverse transformer 540 determines a size of a transformation unit for each coding unit.

The motion compensator 560 may determine a reference index based on the inter-prediction method described above with reference to FIGS. 1A and 1B, and perform motion compensation by using a reference picture corresponding to the reference index from among a reference picture list.

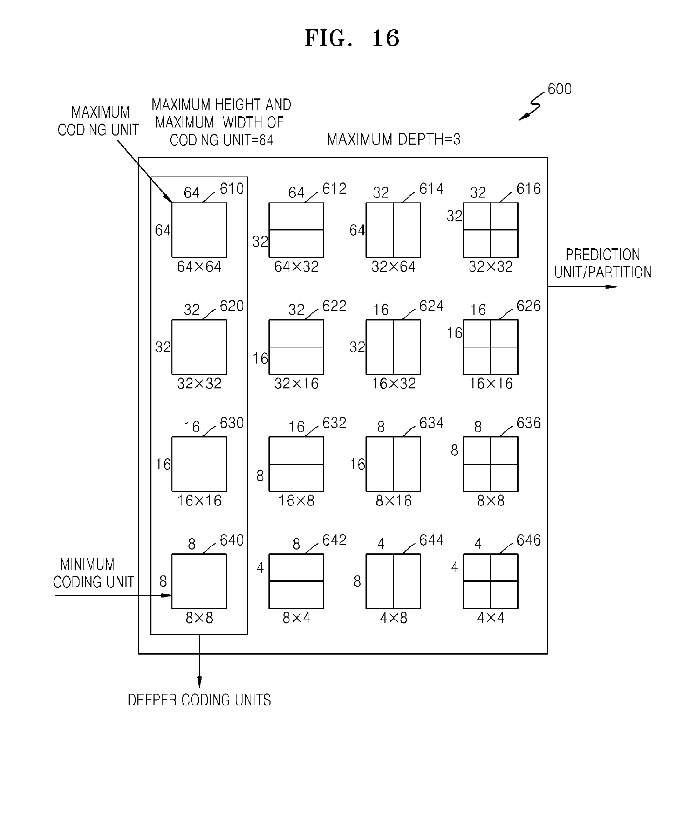

FIG. 16 is a diagram illustrating deeper coding units according to depths, and partitions according to an embodiment of the present invention.

The video encoding apparatus 100 according to an embodiment and the video decoding apparatus 200 according to an embodiment use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to an embodiment, the maximum height and the maximum width of the coding units are each 64, and the maximum depth is 3. In this case, the maximum depth refers to a total number of times the coding unit is split from the maximum coding unit to the minimum coding unit. Since a depth deepens along a vertical axis of the hierarchical structure 600 according to an embodiment, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3. The coding unit 640 having a size of 4x4 and a depth of 3 is a minimum coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions include in the coding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

A partition for inter-prediction according to an embodiment may not include the partitions 646 having a size of 4x4.

In order to determine the coded depth of the maximum coding unit 610, the coding unit determiner 120 of the video encoding apparatus 100 according to an embodiment performs encoding for coding units corresponding to each depth included in the maximum coding unit 610.

A number of deeper coding units according to depths including data in the same range and the same size increases as the depth increases. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding according to depths, a least encoding error may be selected as a representative encoding error for a corresponding depth by performing encoding for each prediction unit in the deeper coding unit along the horizontal axis of the hierarchical structure 600. Alternatively, the minimum encoding error may be searched for by comparing the representative encoding errors according to depths, by performing encoding for each depth as the depth deepens along the vertical axis of the hierarchical structure 600. A depth and a partition having the minimum encoding error in the maximum coding unit 610 may be selected as the coded depth and a partition type of the maximum coding unit 610.

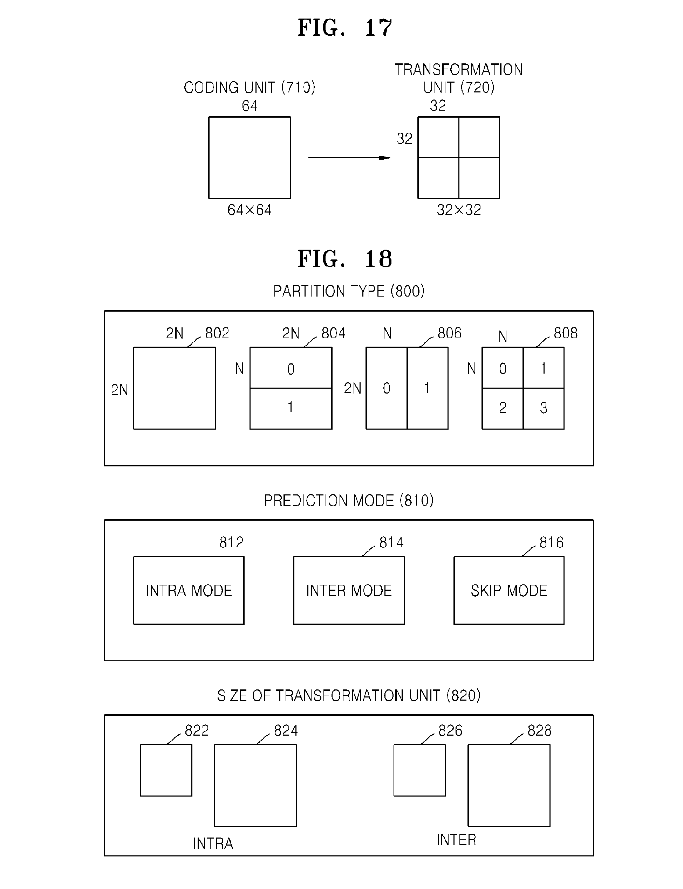

FIG. 17 is a diagram illustrating a relationship between a coding unit and transformation units, according to an embodiment of the present invention.

The video encoding apparatus 100 according to an embodiment or the video decoding apparatus 200 according to an embodiment encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 according to an embodiment or the video decoding apparatus 200 according to an embodiment, if a size of a current coding unit 710 is 64x64, transformation may be performed by using a transformation unit 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 18 is a diagram illustrating encoding information of coding units corresponding to a coded depth, according to an embodiment of the present invention.

The output unit 130 of the video encoding apparatus 100 according to an embodiment may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 210 of the video decoding apparatus 200 according to an embodiment may extract and use the information 800, 810, and 820 for decoding, according to each deeper coding unit.

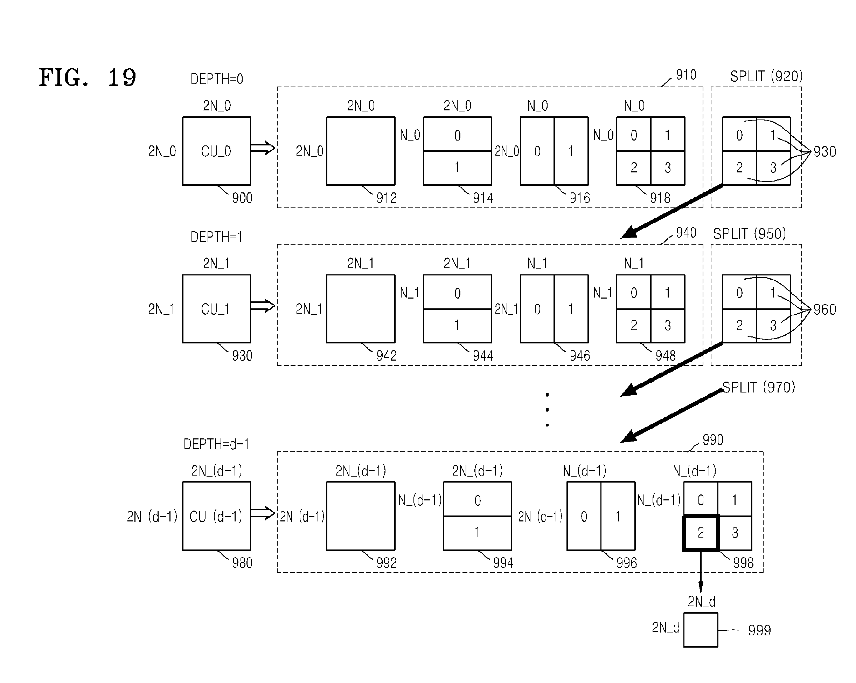

FIG. 19 is a diagram of deeper coding units according to depths, according to an embodiment of the present invention.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 19 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912 through 916 having the sizes of 2N_0x2N_0, 2N_0xN_0, and N_0x2N_0, the prediction unit 910 may not be split into a lower depth.

If the encoding error is the smallest in the partition type 918 having the size of N_0xN_0, a depth is changed from 0 to 1 to split the partition type 918 in operation 920, and encoding is repeatedly performed on coding units 930 having a depth of 2 and a partition type of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1 x2N_1, a partition type 944 having a size of 2N_1xN_1, a partition type 946 having a size of N_1x2N_1, and a partition type 948 having a size of N_1xN_1.

If an encoding error is the smallest in the partition type 948 having the size of N_1xN_1, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, a deeper coding unit may be set up to when a depth is d-1, and split information may be set up to when a depth is d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types to search for a partition type having a minimum encoding error.

Even when the partition type 998 having the size of N_(d-1)xN_(d-1) has the minimum encoding error, since a maximum depth is d, a coding unit CU_(d-1) having a depth of d-1 is no longer split to a lower depth, and a coded depth for a current maximum coding unit 900 is determined to be d-1 and a partition type of the current maximum coding unit 900 may be determined to be N_(d-1)xN_(d-1). Also, since the maximum depth is d, split information is not set for a coding unit 952 having the depth of d-1.

A data unit 999 may be a 'minimum unit' for the current maximum coding unit. A minimum unit according to an embodiment may be a square data unit obtained by splitting a minimum coding unit having a lowest coded depth by 4. By performing the encoding repeatedly, the video encoding apparatus 100 according to an embodiment may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 according to an embodiment may extract and use the information about the coded depth and the prediction unit of the coding unit 900 to decode the partition 912. The video decoding apparatus 200 according to an embodiment may determine a depth, in which split information is 0, as a coded depth by using split information according to depths, and use information about an encoding mode of the corresponding depth for decoding.

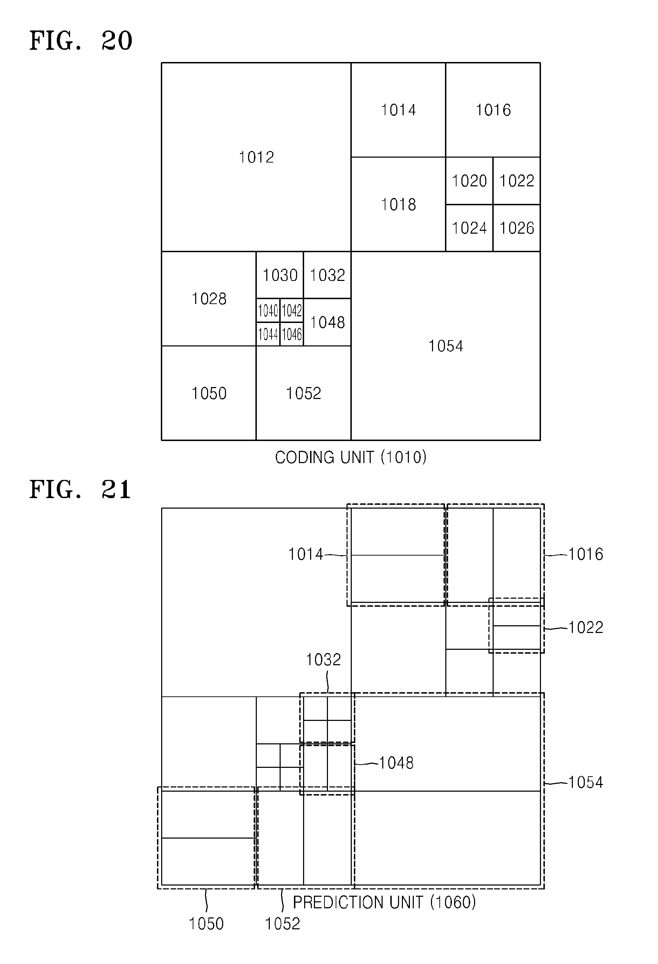

FIGS. 20, 21, and 22 are diagrams illustrating a relationship between coding units, prediction units, and transformation units, according to an embodiment of the present invention.

Coding units 1010 are coding units corresponding to coded depths determined by the video encoding apparatus 100 according to an embodiment, in a maximum coding unit. Prediction units 1060 are partitions of prediction units of each coding unit corresponding to coded depths from among the coding units 1010, and transformation units 1070 are transformation units of each coding unit corresponding to coded depths.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some partitions 1014, 1016, 1022, 1032, 1048, 1050, 1052, and 1054 are obtained by splitting the coding units. In other words, partition types in the partitions 1014, 1022, 1050, and 1054 have a size of 2NxN, partition types in the partitions 1016, 1048, and 1052 have a size of Nx2N, and a partition type of the partition 1032 has a size of NxN. Prediction units and partitions of the coding units 1010 are smaller than or equal to each coding unit.

Transformation or inverse transformation is performed on image data of the part 1052 in the transformation units 1070 in a data unit that is smaller than the coding unit. Also, the coding units 1014, 1016, 1022, 1032, 1048, 1050, 1052, and 1054 are different from those in the prediction units 1060 in terms of sizes and shapes. In other words, the video encoding apparatus 100 according to an embodiment and the video decoding apparatus 200 according to an embodiment may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units according to a recursive tree structure may be obtained. Encoding information may include split information about a coding unit, partition type information, prediction mode information, and transformation unit size information. Table 1 below shows the encoding information that may be set by the video encoding apparatus 100 according to an embodiment and the video decoding apparatus 200 according to an embodiment.

Table 1

| Split Information 0 (Encoding on Coding Unit having Size of 2Nx2N and Current Depth of d) | | | | Split Information 1 |
|---|---|---|---|---|
| Prediction Mode | Partition Type | | Size of Transformation Unit | | Repeatedly Encode Coding Units having Lower Depth of d+1 |
| Intra Inter Skip (Only 2Nx2N) | Symmetrical Partition Type | Asymmetrical Partition Type | Split Information 0 of Transformation Unit | Split Information 1 of Transformation Unit | |
| | 2Nx2N 2NxN Nx2N NxN | 2NxnU 2NxnD nLx2N nRx2N | 2Nx2N | NxN (Symmetrical Type) N/2xN/2 (Asymmetrical Type) | |

The output unit 130 of the video encoding apparatus 100 according to an embodiment may output the encoding information about the coding units according to a tree structure, and the image data and encoding information extractor 220 of the video decoding apparatus 200 according to an embodiment may extract the encoding information about the coding units according to a tree structure from a received bitstream.

Split information indicates whether a current coding unit is split into coding units of a lower depth. If split information of a current depth d is 0, a depth at which a current coding unit is no longer split into a lower depth is a coded depth, and thus partition type information, a prediction mode, and transformation unit size information may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The partition type information may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units according to a tree structure, according to an embodiment, may be assigned with respect to at least one of a coding unit of a coded depth, a prediction unit, and a minimum unit. The coding unit of the coded depth may include at least one of a prediction unit and a minimum unit containing the same encoding information.

Accordingly, it is determined whether adjacent data units are included in the same coding unit of the coded depth by comparing encoding information of the adjacent data units. Also, a corresponding coding unit of a coded depth is determined by using encoding information of a data unit, and thus a distribution of coded depths in a maximum coding unit may be determined.

Accordingly, if a current coding unit is predicted by referring to adjacent data units, encoding information of data units in deeper coding units adjacent to the current coding unit may be directly referred to and used.

Alternatively, when prediction encoding is performed on a current coding unit by referring to adjacent data units, data adjacent to the current coding unit is searched for in a deeper coding unit by using encoding information of an adjacent deeper coding unit, and thus the adjacent coding units may be referred to.

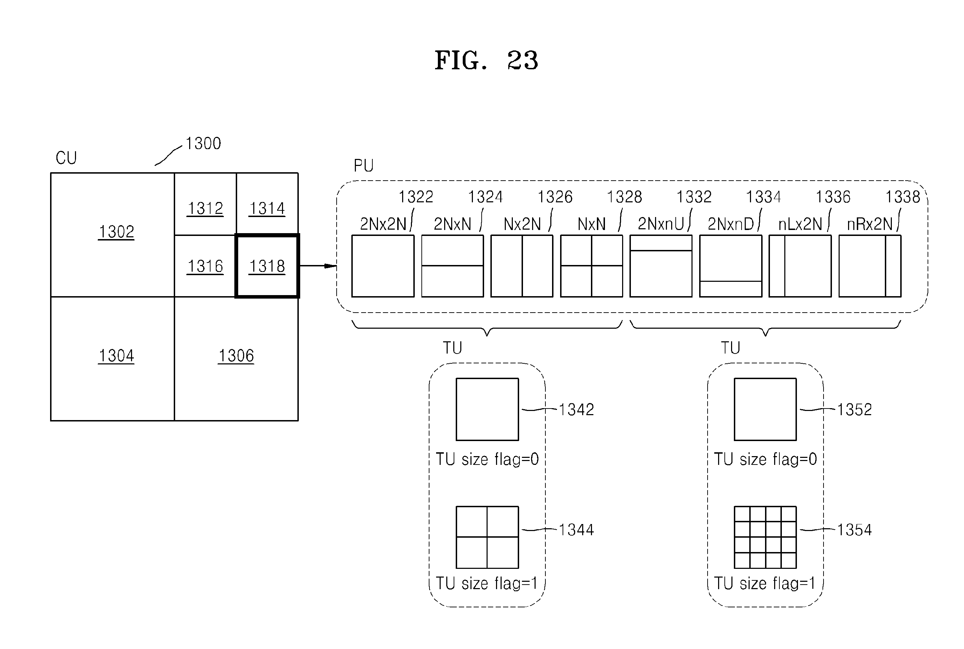

FIG. 23 is a diagram illustrating a relationship between a coding unit, a prediction unit, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Partition type information of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Transformation unit split information (TU size flag) is a type of a transformation index. The size of the transformation unit corresponding to the transformation index may be changed according to a prediction unit type or partition type of the coding unit.

For example, when the partition type information is set to be one of symmetrical the partition types 2Nx2N 1322, 2NxN 1324, Nx2N 1326, and NxN 1328, a transformation unit 1342 having a size of 2Nx2N is set if transformation unit split information is 0, and a transformation unit 1344 having a size of NxN is set if transformation unit split information is 1.

When the partition type information is set to be one of asymmetrical partition types 2NxnU 1332, 2NxnD 1334, nLx2N 1336, and nRx2N 1338, a transformation unit 1352 having a size of 2Nx2N is set if transformation unit split information (TU size flag) is 0, and a transformation unit 1354 having a size of N/2xN/2 is set if transformation unit split information is 1.

The transformation unit split information (TU size flag) described above with reference to FIG. 21 is a flag having a value or 0 or 1, but the transformation unit split information according to an embodiment is not limited to a flag of 1 bit, and a transformation unit may be hierarchically split while the transformation unit split information increases from 0 according to setting. The transformation unit split information may be an example of a transformation index.

In this case, a size of a transformation unit that has been actually used may be expressed by using transformation unit split information according to an embodiment, together with a maximum size and minimum size of the transformation unit. The video encoding apparatus 100 according to an embodiment is capable of encoding maximum transformation unit size information, minimum transformation unit size information, and maximum transformation unit split information. The result of encoding the maximum transformation unit size information, the minimum transformation unit size information, and the maximum transformation unit split information may be inserted into an SPS. The video decoding apparatus 200 according to an embodiment may be used to decode a video by using the maximum transformation unit size information, the minimum transformation unit size information, and the maximum transformation unit split information.

For example, (a) if the size of a current coding unit is 64x64 and a maximum transformation unit size is 32x32, (a-1) then the size of a transformation unit may be 32x32 when transformation unit split information is 0, (a-2) may be 16x16 when the transformation unit split information is 1, and (a-3) may be 8x8 when the transformation unit split information is 2.

As another example, (b) if the size of the current coding unit is 32x32 and a minimum transformation unit size is 32x32, (b-1) then the size of the transformation unit may be 32x32 when the transformation unit split information is 0. Here, the transformation unit split information cannot be set to a value other than 0, since the size of the transformation unit cannot be less than 32x32.

As another example, (c) if the size of the current coding unit is 64x64 and maximum transformation unit split information is 1, then the transformation unit split information may be 0 or 1, and another transformation unit split information cannot be set.

Thus, if it is defined that the maximum transformation unit split information is 'MaxTransformSizeIndex', a minimum transformation unit size is 'MinTransformSize', and a transformation unit size is 'RootTuSize' when the transformation unit split information is 0, then a current minimum transformation unit size 'CurrMinTuSize' that can be determined in a current coding unit, may be defined by Equation (1):

$$\text{CurrMinTuSize} = \max(\text{MinTransformSize}, \text{RootTuSize}/(2\wedge\text{MaxTransformSizeIndex})) \ldots (1)$$

Compared to the minimum transformation unit size 'CurrMinTuSize' that can be determined in the current coding unit, a transformation unit size 'RootTuSize' when the transformation unit split information is 0 may denote a maximum transformation unit size that can be selected in the system. In other words, according to Equation (1), 'RootTuSize/(2^MaxTransformSizeIndex)' denotes a transformation unit size when the transformation unit size 'RootTuSize', when the transformation unit split information is 0, is split a number of times corresponding to the maximum transformation unit split information, and 'MinTransformSize' denotes a minimum transformation size. Thus, a smaller value from among 'RootTuSize/(2^MaxTransformSizeIndex)' and 'MinTransformSize' may be a minimum transformation unit size 'Curr-MinTuSize' that can be determined in the current coding unit.

According to an embodiment, the maximum transformation unit size RootTuSize may vary according to prediction modes.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize) ......... (2)$$

That is, if the current prediction mode is the inter mode, the transformation unit size 'RootTuSize', when the transformation unit split information is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) ...........(3)$$

That is, if the current prediction mode is the intra mode, the transformation unit size 'RootTuSize' when the transformation unit split information is 0 may be a smaller value from among the maximum transformation unit size and the size of the current partition unit.

However, the current maximum transformation unit size 'RootTuSize' according to an embodiment, which varies according to prediction modes in a partition unit is just an example and factors of determining a current maximum transformation unit size are not limited thereto.

According to the video encoding technique based on coding units having a tree structure as described with reference to FIGS. 8 through 20, image data of a spatial domain is encoded for each coding unit of a tree structure. According to the video decoding technique based on coding units having a tree structure, decoding is performed for each maximum coding unit to restore image data of a spatial domain. Thus, a picture and a video that is a picture sequence may be restored. The restored video may be reproduced by a reproducing apparatus, stored in a storage medium, or transmitted through a network.

The embodiments according to the present invention may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g., CD-ROMs, or DVDs).

For convenience of description, the video encoding method according to the inter-prediction method, the motion prediction method, and the motion compensation method described above with reference to FIGS. 1A through 21 will be collectively referred to as a 'video encoding method according to the present invention'. In addition, the video decoding method according to the inter-prediction method and the motion compensation method described above with reference to FIGS. 1A through 20 will be referred to as a 'video decoding method according to the present invention'.

Also, a video encoding apparatus including the apparatus 10, the motion prediction apparatus 20, the motion compensation apparatus 30, and the video encoding apparatus 100, or the image decoder 400, which has been above described with reference to FIGS. 1A through 23, will be referred to as a 'video encoding apparatus according to the present invention'. In addition, a video decoding apparatus including the apparatus 10, the motion compensation apparatus 30, the video decoding apparatus 200, or the image decoder 500, which has been descried above with reference to FIGS. 1A through 23, will be referred to as a 'video decoding apparatus according to the present invention'.

A computer-readable recording medium storing a program, e.g., a disc 26000, according to an embodiment of the present invention will now be described in detail.

FIG. 24 is a diagram of a physical structure of the disc 26000 in which a program is stored, according to an embodiment of the present invention. The disc 26000, which is a storage medium, may be a hard drive, a CD-ROM disc, a Blu-ray disc, or a DVD. The disc 26000 includes a plurality of concentric tracks Tr that are each divided into a specific number of sectors Se in a circumferential direction of the disc 26000. In a specific region of the disc 26000 that stores the program according to an embodiment, a program that executes the quantization parameter determining method, the video encoding method, and the video decoding method described above may be assigned and stored.

A computer system embodied using a storage medium that stores a program for executing the video encoding method and the video decoding method as described above will be described later with reference to FIG. 25.

FIG. 25 is a diagram of a disc drive 26800 for recording and reading a program by using the disc 26000. A computer system 26700 may store a program that executes at least one of a video encoding method and a video decoding method of the present invention, in the disc 26000 via the disc drive 26800. To run the program stored in the disc 26000 in the computer system 26700, the program may be read from the disc 26000 and be transmitted to the computer system 26700 by using the disc drive 26800.

The program that executes at least one of a video encoding method and a video decoding method of the present invention may be stored not only in the disc 26000 illustrated in FIG. 24 or 25 but also in a memory card, a ROM cassette, or a solid state drive (SSD).

A system to which the video encoding method and a video decoding method described above are applied will be described below.

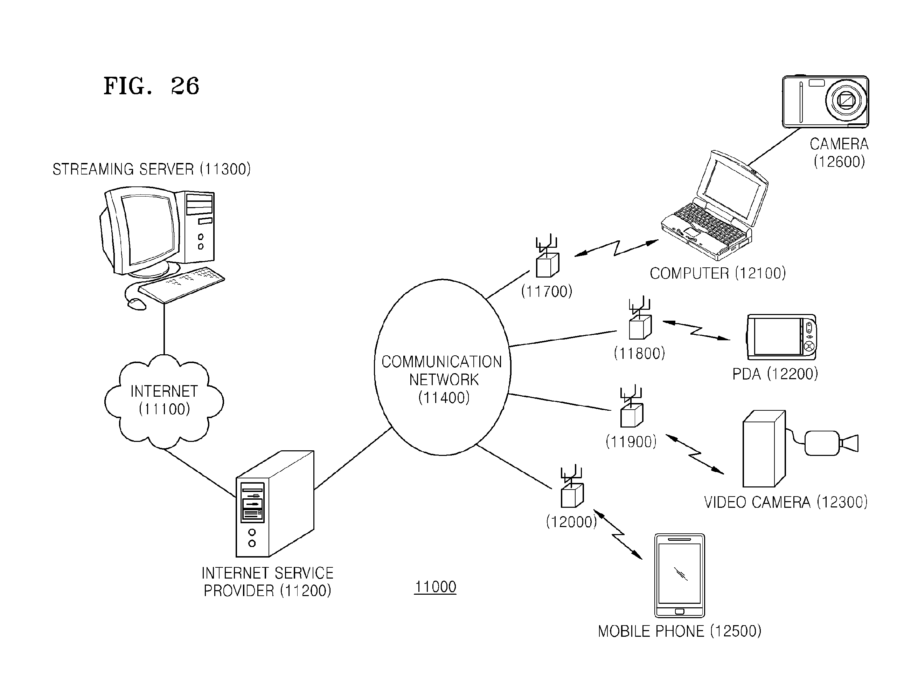

FIG. 26 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 26, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software for video encoding and decoding may be stored in a computer-readable recording medium, e.g., a CD-ROM disc, a floppy disc, a hard disc drive, an SSD, or a memory card, which may be accessible by the computer 12100.

If a video is captured by a camera built in the mobile phone 12500, video data may be received from the mobile phone 12500.

The video data may also be encoded by a large scale integrated circuit (LSI) system installed in the video camera 12300, the mobile phone 12500, or the camera 12600.

The content supply system 11000 according to an embodiment may encode content recorded by a user using the video camera 12300, the camera 12600, the mobile phone 12500, or another imaging device, e.g., content recorded during a concert, and transmit the encoded content to the streaming server 11300. The streaming server 11300 may transmit content data to other clients that requested for the content data.

The clients are devices capable of decoding encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the independent devices included in the content supply system 11000 may be similar to those of a video encoding apparatus and a video decoding apparatus of the present invention.

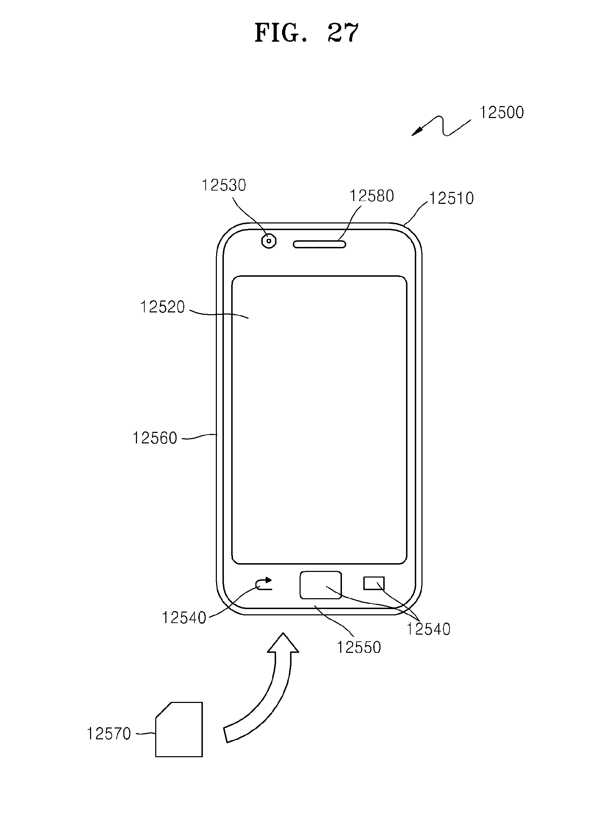

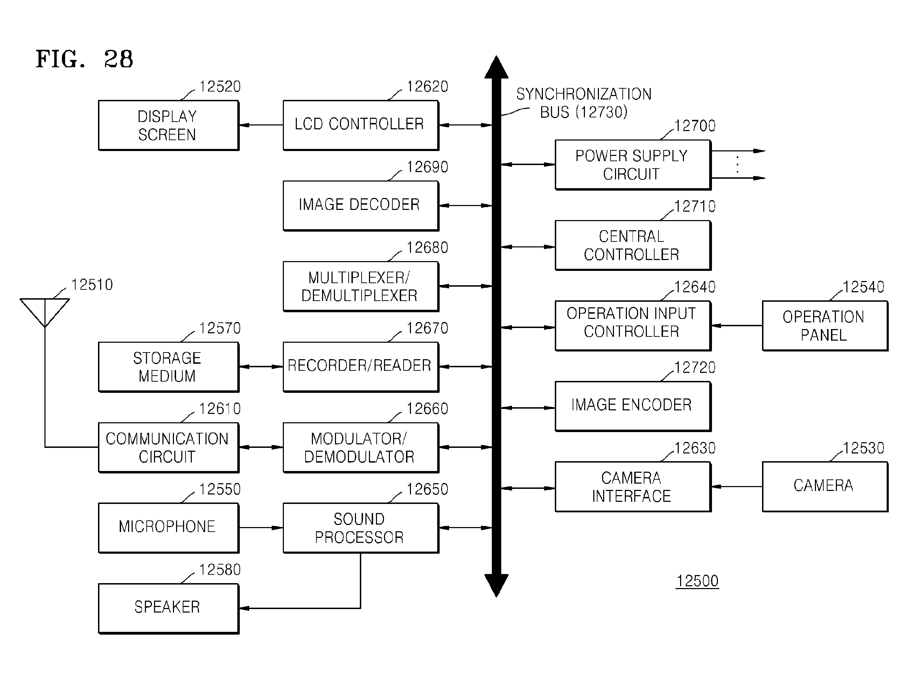

The mobile phone 12500 included in the content supply system 11000 according to an embodiment of the present invention will now be described in greater detail with reference to FIGS. 27 and 28.

FIG. 27 illustrates an external structure of the mobile phone 12500 to which a video encoding method and a video decoding method of the present invention according to embodiments are applied. The mobile phone 12500 may be a smart phone, the functions of which are not limited and a large number of the functions of which may be changed or expanded.

The mobile phone 12500 includes an internal antenna 12510 via which an RF signal may be exchanged with the wireless base station 12000, and includes a display screen 12520 for displaying images captured by the camera 12530 or images that are received via the antenna 12510 and decoded, e.g., a liquid crystal display (LCD) or an organic light-emitting diode (OLED) screen. The smart phone 12510 includes an operation panel 12540 including a control button and a touch panel. If the display screen 12520 is a touch screen, the operation panel 12540 further includes a touch sensing panel of the display screen 12520. The smart phone 12510 includes a speaker 12580 for outputting voice and sound or another type of sound output unit, and a microphone 12550 for inputting voice and sound or another type sound input unit. The smart phone 12510 further includes the camera 12530, such as a CCD camera, to capture video and still images. The smart phone 12510 may further include a storage medium 12570 for storing encoded or decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., an SD card or an electrically erasable and programmable read only memory (EEPROM) included in a plastic case.

FIG. 28 illustrates an internal structure of the mobile phone 12500. To systemically control parts of the mobile phone 12500 including the display screen 12520 and the operation panel 12540, a power supply circuit 12700, an operation input controller 12640, an image encoding unit 12720, a camera interface 12630, an LCD controller 12620, an image decoding unit 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a 'power on' state, the power supply circuit 12700 supplies power to all the parts of the mobile phone 12500 from a battery pack, thereby setting the mobile phone 12500 in an operation mode.

The central controller 12710 includes a CPU, a read only memory (ROM), and a random access memory (RAM).

While the mobile phone 12500 transmits communication data to the outside, a digital signal is generated by the mobile phone 12500 under control of the central controller 12710. For example, the sound processor 12650 may generate a digital sound signal, the image encoding unit 12720 may generate a digital image signal, and text data of a message may be generated via the operation panel 12540 and the operation input controller 12640. When a digital signal is transmitted to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The generated digital sound signal may be transformed into a transmission signal via the modulation/demodulation unit 12660 and the communication circuit 12610, and may be transmitted via the antenna 12510.

When a text message, e.g., email, is transmitted in a data communication mode, text data of the message is input via the operation panel 12540 and is transmitted to the central controller 12710 via the operation input controller 12640. Under control of the central controller 12710, the text data is transformed into a transmission signal via the modulation/demodulation unit 12660 and the communication circuit 12610 and is transmitted to the wireless base station 12000 via the antenna 12510.

To transmit image data in the data communication mode, image data captured by the camera 12530 is provided to the image encoding unit 12720 via the camera interface 12630. The image data captured by the camera 12530 may be directly displayed on the display screen 12520 via the camera interface 12630 and the LCD controller 12620.

A structure of the image encoding unit 12720 may correspond to that of the video encoding apparatus of the present invention described above. The image encoding unit 12720 may transform the image data received from the camera 12530 into compressed and encoded image data according to the video encoding method of the present invention described above, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoding unit 12720, together with the sound data received from the sound processor 12650. The multiplexed data may be transformed into a transmission signal via the modulation/demodulation unit 12660 and the communication circuit 12610, and may then be transmitted via the antenna 12510.

While the mobile phone 12500 receives communication data from the outside, frequency recovery and analog-digital conversion (ADC) are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and generates a digital sound signal by performing frequency conversion and analog-digital conversion (ADC) on the amplified signal. A received digital sound signal is transformed into an analog sound signal via the modulation/demodulation unit 12660 and the sound processor 12650, and the analog sound signal is output via the speaker 12580, under control of the central controller 12710.

When in the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoding unit 12690 may correspond to that of the video decoding apparatus of the present invention described above. The image decoding unit 12690 may decode the encoded video data to obtain restored video data and provide the restored video data to the display screen 12520 via the LCD controller 12620, according to the video decoding method of the present invention described above.

Thus, the video data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both the video encoding apparatus and the video decoding apparatus of the present invention, may be a transceiving terminal including only the video encoding apparatus of the present invention described above, or may be a transceiving terminal including only the video decoding apparatus of the present invention.

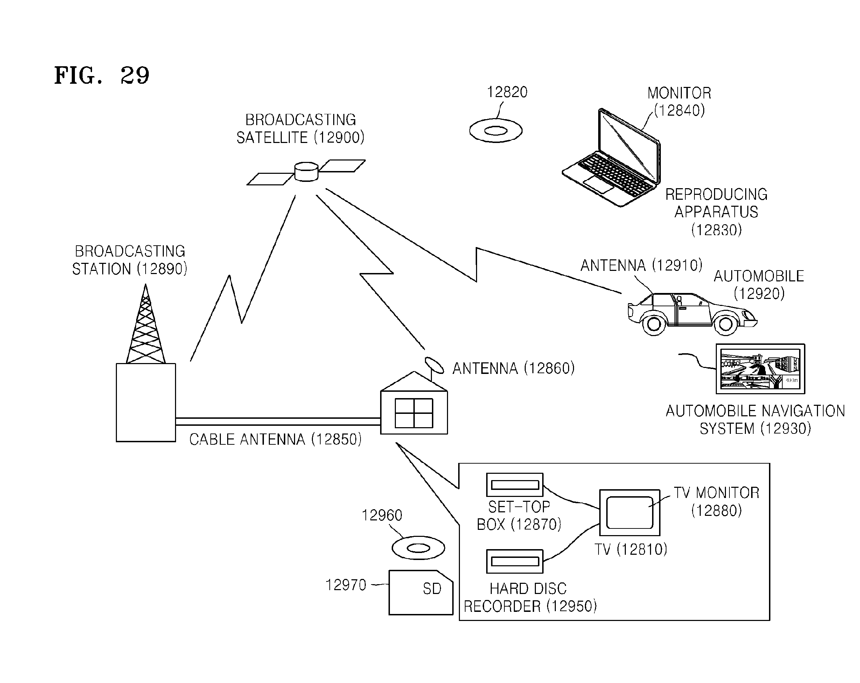

A communication system of the present invention is not limited to the communication system described above with reference to FIG. 26. For example, FIG. 29 illustrates a digital broadcasting system employing a communication system according to the present invention. The digital broadcasting system of FIG. 29 according to an embodiment may receive a digital broadcast transmitted via a satellite or a terrestrial network by using the video encoding apparatus and the video decoding apparatus of the present invention.

Specifically, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When the video decoding apparatus of the present invention is implemented in a reproducing apparatus 12830, the reproducing apparatus 12830 may parse and decode an encoded video stream recorded on a storage medium 12820, such as a disc or a memory card to restore digital signals. Thus, the restored video signal may be reproduced, for example, on a monitor 12840.

In the set-top box 12870 connected to the antenna 12860 for a satellite/terrestrial broadcast or a cable antenna 12850 for receiving a cable TV broadcast, the video decoding apparatus of the present invention may be installed. Data output from the set-top box 12870 may also be reproduced on a TV monitor 12880.

As another example, the video decoding apparatus of the present invention may be installed in the TV receiver 12810 instead of the set-top box 12870.

An automobile 12920 that has an appropriate antenna 12910 may receive a signal transmitted from the satellite 12900 or the wireless base station 11700. A decoded video may be reproduced on a display screen of an automobile navigation system 12930 installed in the automobile 12920.

A video signal may be encoded by the video encoding apparatus of the present invention and may then be recorded and stored in a storage medium. In detail, an image signal may be stored in a DVD disc 12960 by a DVD recorder or may be stored in a hard disc by a hard disc recorder 12950. As another example, the video signal may be stored in an SD card 12970. If the hard disc recorder 12950 includes the video decoding apparatus of the present invention, a video signal recorded on the DVD disc 12960, the SD card 12970, or another storage medium may be reproduced on the monitor 12880.

The automobile navigation system 12930 may not include the camera 12530, the camera interface 12630, and the image encoding unit 12720 of FIG. 26. For example, the computer 12100 and the TV receiver 12810 may not include the camera 12530, the camera interface 12630, and the image encoding unit 12720 of FIG. 26.

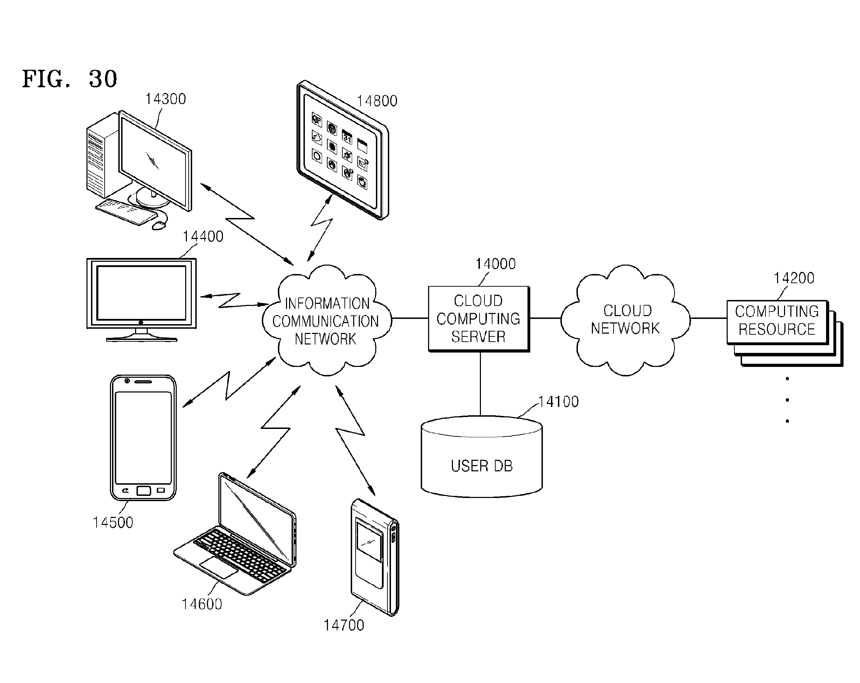

FIG. 30 is a diagram illustrating a network structure of a cloud computing system using a video encoding apparatus and a video decoding apparatus, according to an embodiment of the present invention.

The cloud computing system may include a cloud computing server 14000, a user DB 14100, computing resources 14200, and a user terminal.

The cloud computing system provides an on-demand outsourcing service of the computing resources via an information communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via an information communication network including the Internet and a mobile telecommunication network. User terminals may be provided with cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed to a cloud computing service is stored in the user DB 14100. The user information may include logging information and personal credit information, such as addresses, names, etc. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. Accordingly, for example, when a predetermined video service is provided to the notebook computer 14600 in response to a request from the notebook computer 14600, a reproduction history of the predetermined video service is stored in the user DB 14100. When a request to reproduce the same video service is received from the smart phone 14500, the cloud computing server 14000 searches for and reproduces the predetermined video service, based on the user DB 14100. When the smart phone 14500 receives a video data stream from the cloud computing server 14000, a process of reproducing a video by decoding the video data stream is similar to an operation of the mobile phone 12500 described above with reference to FIG. 24.

The cloud computing server 14000 may refer to a reproduction history of a predetermined video service, stored in the user DB 14100. For example, the cloud computing server 14000 receives a request to reproduce a video stored in the user DB 14100, from a user terminal. If this video was being reproduced, then a streaming method of the cloud computing server 14000 may vary based on whether the video is to be reproduced starting from a start thereof or a pausing point thereof according to a selection of the user terminal. For example, if the user terminal requests to reproduce the video starting from the start thereof, the cloud computing server 14000 transmits streaming data of the video starting from a first frame thereof to the user terminal. If the terminal requests to reproduce the video starting from the pausing point thereof, the cloud computing server 14000 transmits streaming data of the video starting from a frame corresponding to the pausing point, to the user terminal.

In this case, the user terminal may include the video decoding apparatus of the present invention described above with reference to FIGS. 1A to 23. As another example, the user terminal may include the video encoding apparatus of the present invention described above with reference to FIGS. 1A to 23. Alternatively, the user terminal may include both the video decoding apparatus and the video encoding apparatus of the present invention described above with reference to FIGS. 1A to 23.

Various applications of the video encoding method, the video decoding method, the video encoding apparatus, and the video decoding apparatus of the present invention described above with reference to FIGS. 1A to 23 have been described above with reference to FIGS. 24 to 30. However, methods of storing the video encoding method and the video decoding method of the present invention described above with reference to FIGS. 1A through 23 in a storage medium or methods of implementing the video encoding apparatus and the video decoding apparatus of the present invention in a device, according to various embodiments of the present invention, are not limited to the embodiments described above with reference to FIGS. 24 to 30.

While this invention has been particularly shown and described with reference to preferred embodiments thereof, it will be understood by those of ordinary skill in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

**Claims**

1. A method of determining a reference image for inter-prediction, the method comprising:

   determining a slice type of a slice comprising a block;
   if it is determined that the slice type is a B-slice type capable of uni-directional prediction or bi-directional prediction, determining an inter-prediction direction of the block to be one of a first direction, a second direction, and a bi-direction;
   if the inter-prediction direction is not the second direction, determining a first direction reference index among a first direction reference picture list to be a reference index for the block; and
   if the inter-prediction direction is not the first direction, determining that a second direction reference index among a second direction reference picture list is a reference index for the block.

2. The method of claim 1, wherein, if the inter-prediction direction is the bi-directional prediction, the first direct reference index is determined from the first direction reference picture list and the second direction reference index is determined from the second direction reference picture list.

3. The method of claim 1, wherein the determining of the first direction reference index comprises:

   determining a difference value of a first motion vector indicating a reference image indicated by the first direction reference index; and
   determining a motion vector predictor of which image is used from the first direction reference index, and
   the determining of the second direction reference index comprises:

      determining a difference value of a second motion vector indicating a reference image indicated by the second direction reference index; and
      determining a motion vector predictor of which image is used from the second direction reference index.

4. The method of claim 1, further comprising:

   determining inter-prediction mode information indicating that the inter-prediction direction is in two bits;
   selecting one of four context model indexes based on a depth of a coding unit of a current block, for a context model of a first bin from among two bins corresponding to the inter-prediction mode information in two bits; and
   selecting one context model index independently from another symbol, for a context model of a second bin from among the two bins,
   wherein the first bin indicates whether the inter-prediction direction is a uni-direction or a bi-direction, and the second bin indicates whether the uni-direction is the first direction or the second direction.

5. The method of claim 1, wherein the determining of the slice type comprises parsing slice type information of the slice from a slice header in a received bitstream,
   the determining of the inter-prediction direction comprises:

   parsing inter-prediction mode information indicating the inter-prediction direction from a prediction unit region comprising prediction information of the block in the received bitstream; and
   reading which one of first direction prediction, second direction prediction, and bi-directional prediction is indicated by the inter-prediction mode information,
   the determining of the first direction reference index comprises:

      parsing the first direction reference index information and difference value information of the first motion vector from the prediction unit region comprising the prediction information of the block in the received bitstream; and
      parsing information indicating a motion vector predictor of which image is used from the first direction reference index, and
      the determining of the second direction reference index comprises parsing the second direction reference index information and difference value information of the second motion vector from the prediction unit region in the received bitstream.

6. The method of claim 4, further comprising restoring the inter-prediction mode information by performing entropy

decoding using a context model determined for each bin on a bit string in a received bitstream, the bit string comprising the inter-prediction mode information.

7. The method of claim 5, further comprising:

parsing a reference index, a motion vector, and a residue per inter mode block in the slice, from the received bitstream;
determining a reference picture indicated by the reference index in at least one of the first direction reference picture list and the second direction reference picture list; and
performing motion compensation and generating a restored image by using the determined reference picture, the motion vector, and the residue per inter mode block.

8. The method of claim 1, further comprising:

inserting slice type information indicating the slice type into a slice header of the slice;
inserting inter-prediction mode information indicating any one of first direction prediction, second direction prediction, and bi-directional prediction into a prediction unit region comprising prediction information of the block;
inserting the first direction reference index information and difference value information of the first motion vector into the prediction unit region;
inserting the second direction reference index information and difference value information of the second motion vector into the prediction unit region; and
transmitting a bitstream comprising the slice header and the prediction unit region.

9. The method of claim 4, further comprising transmitting a bit string generated by performing entropy decoding by using a context model determined for each bin of the inter-prediction mode information.

10. The method of claim 8, further comprising:

performing motion prediction on the block by using reference pictures in at least one of the first direction reference picture list and the second direction reference picture list;
determining at least one reference picture comprising a most similar reference block based on a result of the motion prediction;
determining the reference index indicating the determined at least one reference picture from among the first direction reference picture list and the second direction reference picture list;
determining a motion vector predictor of which image is used from the first and second direction reference indexes; and
inserting a motion vector and a residue indicating the determined at least one reference picture, and an inter-prediction direction and a reference index indicating the determined at least one reference picture into a block region of the bitstream,
wherein the determining of the first direction reference index comprises encoding the first direction reference index when the determined at least one reference picture does not belong to the second direction reference list, and
the determining of the second direction reference index comprises encoding the second direction reference index when the determined at least one reference picture does not belong to the first direction reference list.

11. An apparatus for determining a reference image, the apparatus comprising:

an inter-prediction direction determiner that determines a slice type of a slice comprising a block, and if the slice type is a B-slice type capable of uni-directional prediction or bi-directional prediction determines an inter-prediction direction of the block to be one of a first direction, a second direction, and a bi-direction; and
a reference index determiner that determines a first direction reference index from a first direction reference picture list as a reference index for the block if the inter-prediction direction is not the second direction, and determines a second direction reference index from a second direction reference picture list as a reference index for the block if the inter-prediction direction is not the first direction.

12. A method of determining a reference image for inter-prediction, the method comprising:

determining whether a temporal motion vector predictor is usable for a current slice of an image;

if the temporal motion vector predictor is usable in the current slice and the slice type is a B-slice type capable of uni-directional prediction or bi-directional prediction, determining whether a picture comprising a collocated block exists in a first direction reference picture list;

if the temporal motion vector predictor is not usable in the current slice, determining index information of the picture comprising the collocated block from a predetermined reference picture list; and

determining a motion vector predictor of a current block by using a motion vector of the collocated block.

13. The method of claim 12, further comprising:

determining a collocated image from the determined picture index, and determining a motion vector predictor of the current block based on a motion vector of the collocated block;

determining a motion vector of the current block by using the motion vector predictor; and

determining a reference block of the current block by using the motion vector.

14. The method of claim 12, wherein the determining of whether the picture comprising the collocated block exists in the first direction reference picture list comprises:

parsing information indicating usability of the temporal motion vector predictor from a slice header of the current slice;

if the temporal motion vector predictor is usable, parsing information from the slice header, the information indicating whether a picture comprising a collocated block exists in the first direction reference picture list and whether index information of the picture comprising the collocated block exists in a predetermined reference picture list.

15. The method of claim 12, wherein the determining of whether the picture comprising the collocated block exists in the first direction reference picture list comprises:

inserting information indicating usability of the temporal motion vector predictor into a slice header of the current slice; and

if the temporal motion vector predictor is usable, inserting information into the slice header, the information indicating whether a picture comprising a collocated block exists in the first direction reference picture list and whether index information of the picture comprising the collocated block exists in a predetermined reference picture list.

# FIG. 1A

# FIG. 1B

# FIG. 2A

MOTION PREDICTOR

INTER-PREDICTION INFORMATION TRANSMITTER

# FIG. 2B

START

DETERMINE SLICE TYPE — 21

PERFORM BI-DIRECTIONAL MOTION PREDICTION AND DETERMINE AT LEAST ONE REFERENCE PICTURE WHEN B-SLICE TYPE — 23

DETERMINE REFERENCE INDEX INDICATED BY AT LEAST ONE REFERENCE PICTURE AMONG FIRST AND SECOND DIRECTION REFERENCE PICTURE LISTS — 25

ENCODE FIRST DIRECTION REFERENCE INDEX WHEN INTER-PREDICTION DIRECTION IS NOT SECOND DIRECTION, AND ENCODE SECOND DIRECTION REFERENCE INDEX WHEN INTER-PREDICTION DIRECTION IS NOT FIRST DIRECTION — 27

END

## FIG. 3A

30

| 32 | 34 |
|---|---|
| INTER-PREDICTION INFORMATION RECEIVER | MOTION COMPENSATOR |

## FIG. 3B

START

DETERMINE SLICE TYPE ——— 31

DETERMINE INTER-PREDICTION DIRECTION OF BLOCK WHEN B-SLICE TYPE ——— 33

DETERMINE FIRST DIRECTION REFERENCE INDEX WHEN INTER-PREDICTION DIRECTION IS NOT SECOND DIRECTION ——— 35

DETERMINE SECOND DIRECTION REFERENCE INDEX WHEN INTER-PREDICTION DIRECTION IS NOT FIRST DIRECTION ——— 37

PERFORM MOTION COMPENSATION BY USING REFERENCE BLOCK FOR EACH BLOCK ——— 39

END

## FIG. 4

40

| inter_pred_flag | NAME OF inter_pred flag |
|---|---|
| INFERRED | Pred_L0 |
| 0 | Pred_LC |
| 1 | Pred_BI |

45

| inter_pred_idc | NAME OF inter_pred_idc | |
|---|---|---|
| | ( nPbW + nPbH ) != 12 | ( nPbW + nPbH ) == 12 |
| 0 | PRED_L0 | PRED_L0 |
| 1 | PRED_L1 | PRED_L1 |
| 2 | PRED_B1 | na |

## FIG. 5

50

| slice_header( ) { |
|---|
| ... |
| 52 ── if( lists_modification_present_flag ) { |
| 54 ── ref_pic_list_modification( ) |
| ~~ref_pic_list_combination( )~~ |
| ... |

60

## FIG. 6

60

```
ref_pic_list_combination( ) {
    if( slice_type  = =  B ) {
        ref_pic_list_combination_flag
        if( ref_pic_list_combination_flag ) {
            num_ref_idx_lc_active_minus1
            ref_pic_list_modification_flag_lc
            if( ref_pic_list_modification_flag_lc )
                for( i =0; i <= num_ref_idx_lc_active_minus1; i++ ) {
                    pic_from_list_0_flag
                    if( ( pic_from_list_0_flag  &&
                        num_ref_idx_l0_active_minus1 > 0 ))  | |
                        ( !pic_from_list_0_flag  &&
                        num_ref_idx_l1_active_minus1 > 0 )
                        ref_idx_list_curr
                }
            }
        }
    }
}
```

# FIG. 7

```
pred_weight_table( ) {                                               70
    ...
 71 ── if( slice_type  = =  B ) {
        if( ref_pic_list_combination_flag  = =  0 ) {
            for( i = 0; i <= num_ref_idx_l1_active_minus1; i++ ) {
                luma_weight_l1_flag
                if( luma_weight_l1_flag ) {
                    delta_luma_weight_l1[ i ]
                    luma_offset_l1[ i ]
                }
 73         if( chroma_format_idc  !=  0 ) {
                    chroma_weight_l1_flag
                    if( chroma_weight_l1_flag )
                    for( j = 0; j < 2; j++ ) {
                        delta_chroma_weight_l1[ i ][ j ]
                        delta_chroma_offset_l1[ i ][ j ]
                    }
                }
            }
        } else {
            for( i = 0; i <= num_ref_idx_lc_active_minus1; i++ ) {
                luma_weight_lc_flag
                if( luma_weight_l1_flag ) {
                    delta_luma_weight_lc[ i ]
                    luma_offset_lc[ i ]
 75             }
                if( chroma_format_idc  !=  0 ) {
                    chroma_weight_lc_flag
                    if( chroma_weight_lc_flag )
                    for( j = 0; j < 2; j++ ) {
                        delta_chroma_weight_lc[ i ][ j ]
                        delta_chroma_offset_lc[ i ][ j ]
                    }
                }
            }
        }
    }
}
```

# FIG. 8

80

```
prediction_unit( x0, y0, log2CbSize ) {

    ...

    } else {
        if( slice_type = = B )
            inter_pred_flag[ x0 ][ y0 ]
            if( inter_pred_flag[ x0 ][ y0 ] = = Pred_LC ) {
                if( num_ref_idx_lc_active_minus1 > 0 )
                    ref_idx_lc[ x0 ][ y0 ]
                mvd_coding(mvd_lc[ x0 ][ y0 ][ 0 ],
                            mvd_lc[ x0 ][ y0 ][ 1 ])
                mvp_lc_flag[ x0 ][ y0 ]
            } else { /* Pred_L0 or Pred_BI */
            if( inter_pred_flag[ x0 ][ y0 ] != Pred_L1 ) {
                if( num_ref_idx_l0_active_minus1 > 0 )
                    ref_idx_l0[ x0 ][ y0 ]
                mvd_coding(mvd_l0[ x0 ][ y0 ][ 0 ],
                            mvd_l0[ x0 ][ y0 ][ 1 ])
                mvp_l0_flag[ x0 ][ y0 ]
            }
            if( inter_pred_flag[ x0 ][ y0 ] = = Pred_BI ) {
            if( inter_pred_flag[ x0 ][ y0 ] != Pred_L0 ) {
                if( num_ref_idx_l1_active_minus1 > 0 )
                    ref_idx_l1[ x0 ][ y0 ]
                if( mvd_l1_zero_flag ) {
                    mvd_l1[ x0 ][ y0 ][ 0 ] = 0
                    mvd_l1[ x0 ][ y0 ][ 1 ] = 0
                } else
                    mvd_coding( mvd_l1[ x0 ][ y0 ][ 0 ],
                                mvd_l1[ x0 ][ y0 ][ 1 ] )
                mvp_l1_flag[ x0 ][ y0 ]
            }
        }
    }
}
```

# FIG. 9

91

| pic_segment_header( ) { |
|---|
| ... |
| 93 —— slice_temporal_mvp_enabled_flag |
| ... |

# FIG. 10

50

| slice_segment_header( ) { |
|---|
| ... |
| 101 —— if( slice_temporal_mvp_enabled_flag ) { |
| 103 —— if( slice_type = = B ) |
| collocated_from_l0_flag |
| if()(collocated_from_l0_flag  &&  num_ref_idx_l0_active_minus1 > 0)  \|\| <br> (!collocated_from_l0_flag  &&  num_ref_idx_l1_active_minus1 > 0) ) |
| collocated_ref_idx |
| } |
| if( ( weighted_pred_flag  &&   slice_type = = P)  \|\| |
| ( weighted_bipred_idc  = =  1  &&  slice_type  = =  B ) ) |
| pred_weight_table( ) |
| } |

105

## FIG. 11

100

110
MAXIMUM
CODING
UNIT SPLITTER

120
CODING UNIT
DETERMINER

130
OUTPUT UNIT

## FIG. 12

200

210
RECEIVER

220
IMAGE DATA AND
ENCODING
INFORMATION
EXTRACTOR

230
IMAGE DATA
DECODER

# FIG. 13

## FIG. 14

# FIG. 15

# FIG. 16

MAXIMUM CODING UNIT

MAXIMUM HEIGHT AND MAXIMUM WIDTH OF CODING UNIT=64

MAXIMUM DEPTH=3

600

64 — 610
64
64×64

64 — 612
32
64×32

32 — 614
64
32×64

32 — 616
32
32×32

PREDICTION UNIT/PARTITION

32 — 620
32
32×32

32 — 622
16
32×16

16 — 624
32
16×32

16 — 626
16
16×16

16 — 630
16
16×16

16 — 632
8
16×8

8 — 634
16
8×16

8 — 636
8
8×8

MINIMUM CODING UNIT

8 — 640
8
8×8

8 — 642
4
8×4

4 — 644
8
4×8

4 — 646
4
4×4

DEEPER CODING UNITS

45

# FIG. 17

CODING UNIT (710)

64

64×64

TRANSFORMATION UNIT (720)

32

32

32×32

# FIG. 18

PARTITION TYPE (800)

2N ___ 802

2N

2N

2N ___ 804

N

0

1

N ___ 806

2N  0  1

N ___ 808

N  0  1

    2  3

PREDICTION MODE (810)

812

INTRA MODE

814

INTER MODE

816

SKIP MODE

SIZE OF TRANSFORMATION UNIT (820)

822    824

INTRA

826    828

INTER

FIG. 19

## FIG. 20

CODING UNIT (1010)

## FIG. 21

PREDICTION UNIT (1060)

# FIG. 22

TRANSFORMATION UNIT (1070)

1014, 1016, 1022, 1032, 1048, 1054, 1050, 1052

FIG. 23

CU

1300

1302

1312 | 1314
1316 | 1318

1304 | 1306

PU

1322    1324    1326    1328    1332    1334    1336    1338
2Nx2N  2NxN   Nx2N   NxN   2NxnU  2NxnD  nLx2N  nRx2N

TU

TU size flag=0 ──1342

TU size flag=1 ──1344

TU

TU size flag=0 ──1352

TU size flag=1 ──1354

# FIG. 24

Se

Tr

DISC (26000)

# FIG. 25

26700

26800

26000

# FIG. 26

STREAMING SERVER (11300)

INTERNET (11100)

INTERNET SERVICE PROVIDER (11200)

11000

COMMUNICATION NETWORK (11400)

(11700)

(11800)

(11900)

(12000)

COMPUTER (12100)

PDA (12200)

VIDEO CAMERA (12300)

MOBILE PHONE (12500)

CAMERA (12600)

EP 2 840 793 A1

# FIG. 27

12500

12530

12580

12510

12520

12560

12540

12550

12540

12570

# FIG. 28

DISPLAY SCREEN (12520)

LCD CONTROLLER (12620)

IMAGE DECODER (12690)

MULTIPLEXER/ DEMULTIPLEXER (12680)

STORAGE MEDIUM (12570)

RECORDER/READER (12670)

COMMUNICATION CIRCUIT (12610)

MODULATOR/ DEMODULATOR (12660)

MICROPHONE (12550)

SOUND PROCESSOR (12650)

SPEAKER (12580)

SYNCHRONIZATION BUS (12730)

POWER SUPPLY CIRCUIT (12700)

CENTRAL CONTROLLER (12710)

OPERATION INPUT CONTROLLER (12640)

OPERATION PANEL (12540)

IMAGE ENCODER (12720)

CAMERA INTERFACE (12630)

CAMERA (12530)

12510

12500

EP 2 840 793 A1

## FIG. 29

BROADCASTING SATELLITE (12900)

12820

MONITOR (12840)

REPRODUCING APPARATUS (12830)

BROADCASTING STATION (12890)

ANTENNA (12910)

AUTOMOBILE (12920)

ANTENNA (12860)

AUTOMOBILE NAVIGATION SYSTEM (12930)

CABLE ANTENNA (12850)

12960

SET-TOP BOX (12870)

TV MONITOR (12880)

12970 — SD

TV (12810)

HARD DISC RECORDER (12950)

FIG. 30

## INTERNATIONAL SEARCH REPORT

| International application No. |
|---|
| **PCT/KR2013/003142** |

**A. CLASSIFICATION OF SUBJECT MATTER**

*H04N 7/34(2006.01)i*

According to International Patent Classification (IPC) or to both national classification and IPC

**B. FIELDS SEARCHED**

Minimum documentation searched (classification system followed by classification symbols)
H04N 7/34; H04N 7/32; H04N 7/26; H04N 7/12

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: B slice, direction, reference index, tempral motion vector predictor, collocated block

**C. DOCUMENTS CONSIDERED TO BE RELEVANT**

| Category* | Citation of document, with indication, where appropriate, of the relevant passages | Relevant to claim No. |
|---|---|---|
| A | JP 11-298902A (SONY CORP.) 29 October 1999<br>See paragraphs [0035]-[0041]; and figures 1 and 6-7. | 1-15 |
| A | KR 10-2003-0086101 A (LG ELECTRONICS INC.) 07 November 2003<br>See page 5, line 24 - page 7, line 24; and figure 2. | 1-15 |
| A | KR 10-2011-0085896 A (SAMSUNG ELECTRONICS CO., LTD.) 27 July 2011<br>See paragraphs [0109]-[0132]; and figures 11a-11b. | 1-15 |
| A | US 2004-0066848 A1 (JEON, Byeong Moon) 08 April 2004<br>See paragraphs [0097]-[0103]; and figures 3 and 6. | 1-15 |
| A | US 2012-0027088 A1 (CHIEN, Wei-Jung et al.) 02 February 2012<br>See paragraphs [0062]-[0070]; and figure 3. | 1-15 |

| ☐ Further documents are listed in the continuation of Box C. | ☒ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 JULY 2013 (09.07.2013) | **10 JULY 2013 (10.07.2013)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/003142**

| Patent document cited in search report | Publication date | Patent family member | Publication date |
|---|---|---|---|
| JP 11-298902A | 29/10/1999 | NONE | |
| KR 10-2003-0086101 A | 07/11/2003 | KR 10-0488043 B1 | 06/05/2005 |
| KR 10-2011-0085896 A | 27/07/2011 | AU 2011-207924 A1 | 09/08/2012 |
| | | CN 102714736 A | 03/10/2012 |
| | | EP 2510700 A2 | 17/10/2012 |
| | | JP 2013-517734 A | 16/05/2013 |
| | | MX 2012008320 A | 08/08/2012 |
| | | US 2011-0176615 A1 | 21/07/2011 |
| | | WO 2011-090314 A2 | 28/07/2011 |
| | | WO 2011-090314 A3 | 10/11/2011 |
| US 2004-0066848 A1 | 08/04/2004 | AT 354259 T | 15/03/2007 |
| | | AT 482571 T | 15/10/2010 |
| | | AT 482572 T | 15/10/2010 |
| | | AT 482573 T | 15/10/2010 |
| | | AT 482574 T | 15/10/2010 |
| | | AT 482575 T | 15/10/2010 |
| | | AT 484156 T | 15/10/2010 |
| | | AT 488097 T | 15/11/2010 |
| | | AT 488963 T | 15/12/2010 |
| | | AT 488964 T | 15/12/2010 |
| | | CN 100473170 C0 | 25/03/2009 |
| | | CN 1269361 C0 | 09/08/2006 |
| | | CN 1487748 A | 07/04/2004 |
| | | CN 1487748 C0 | 09/08/2006 |
| | | CN 1812585 A | 02/08/2006 |
| | | CN 1812585 B | 18/08/2010 |
| | | CN 1812585 C0 | 02/08/2006 |
| | | CN 1812586 A | 02/08/2006 |
| | | DE 10300533 A1 | 15/04/2004 |
| | | DE 10300533 A9 | 28/10/2004 |
| | | DE 10300533 B4 | 17/11/2005 |
| | | DE 10362106 B3 | 22/09/2011 |
| | | DE 20321473 U1 | 05/07/2007 |
| | | DE 60311720 D1 | 29/03/2007 |
| | | DE 60311720 T2 | 13/09/2007 |
| | | DE 60311720 T9 | 14/02/2008 |
| | | DE 60334330 D1 | 04/11/2010 |
| | | DE 60334336 D1 | 04/11/2010 |
| | | DE 60334337 D1 | 04/11/2010 |
| | | DE 60334338 D1 | 04/11/2010 |
| | | DE 60334339 D1 | 04/11/2010 |
| | | DE 60334505 D1 | 18/11/2010 |
| | | DE 60334941 D1 | 23/12/2010 |
| | | DE 60335034 D1 | 30/12/2010 |
| | | DE 60335046 D1 | 30/12/2010 |
| | | DK 1406453 T3 | 11/06/2007 |

Form PCT/ISA/210 (patent family annex) (July 2009)

INTERNATIONAL SEARCH REPORT
Information on patent family members

International application No.

**PCT/KR2013/003142**

| Patent document cited in search report | Publication date | Patent family member | Publication date |
|---|---|---|---|
| | | DK 1603344 T3 | 07/03/2011 |
| | | DK 1796396 T3 | 07/03/2011 |
| | | DK 1809048 T3 | 24/01/2011 |
| | | DK 1821547 T3 | 28/02/2011 |
| | | DK 2003899 T3 | 24/01/2011 |
| | | DK 2003900 T3 | 24/01/2011 |
| | | DK 2009927 T3 | 24/01/2011 |
| | | DK 2009928 T3 | 24/01/2011 |
| | | DK 2015585 T3 | 31/01/2011 |
| | | EP 1406453 A1 | 07/04/2004 |
| | | EP 1406453 B1 | 14/02/2007 |
| | | EP 1603344 A1 | 07/12/2005 |
| | | EP 1603344 B1 | 17/11/2010 |
| | | EP 1796396 A1 | 13/06/2007 |
| | | EP 1796396 B1 | 17/11/2010 |
| | | EP 1796396 B8 | 02/02/2011 |
| | | EP 1809048 A1 | 18/07/2007 |
| | | EP 1809048 B1 | 22/09/2010 |
| | | EP 1821547 A2 | 22/08/2007 |
| | | EP 1821547 A3 | 05/09/2007 |
| | | EP 1821547 B1 | 10/11/2010 |
| | | EP 2001240 A1 | 10/12/2008 |
| | | EP 2003899 A2 | 17/12/2008 |
| | | EP 2003899 A3 | 21/01/2009 |
| | | EP 2003899 B1 | 22/09/2010 |
| | | EP 2003900 A2 | 17/12/2008 |
| | | EP 2003900 A3 | 21/01/2009 |
| | | EP 2003900 B1 | 22/09/2010 |
| | | EP 2009925 A2 | 31/12/2008 |
| | | EP 2009925 A3 | 21/01/2009 |
| | | EP 2009926 A2 | 31/12/2008 |
| | | EP 2009926 A3 | 21/01/2009 |
| | | EP 2009927 A2 | 31/12/2008 |
| | | EP 2009927 A3 | 21/01/2009 |
| | | EP 2009927 B1 | 22/09/2010 |
| | | EP 2009928 A2 | 31/12/2008 |
| | | EP 2009928 A3 | 21/01/2009 |
| | | EP 2009928 B1 | 22/09/2010 |
| | | EP 2015585 A2 | 14/01/2009 |
| | | EP 2015585 A3 | 21/01/2009 |
| | | EP 2015585 B1 | 06/10/2010 |
| | | EP 2015586 A2 | 14/01/2009 |
| | | EP 2015586 A3 | 21/01/2009 |
| | | EP 2046054 A2 | 08/04/2009 |
| | | EP 2046054 A3 | 06/05/2009 |
| | | EP 2046055 A2 | 08/04/2009 |
| | | EP 2046055 A3 | 06/05/2009 |
| | | EP 2046056 A2 | 08/04/2009 |
| | | EP 2046056 A3 | 06/05/2009 |
| | | EP 2046057 A2 | 08/04/2009 |

EP 2 840 793 A1

INTERNATIONAL SEARCH REPORT
Information on patent family members

International application No.

**PCT/KR2013/003142**

| Patent document cited in search report | Publication date | Patent family member | Publication date |
|---|---|---|---|
| | | EP 2046057 A3 | 06/05/2009 |
| | | EP 2046058 A2 | 08/04/2009 |
| | | EP 2046058 A3 | 06/05/2009 |
| | | EP 2046059 A2 | 08/04/2009 |
| | | EP 2046059 A3 | 06/05/2009 |
| | | EP 2046060 A2 | 08/04/2009 |
| | | EP 2046060 A3 | 06/05/2009 |
| | | EP 2059054 A1 | 13/05/2009 |
| | | ES 2281573 T3 | 01/10/2007 |
| | | GB 0300288 D0 | 05/02/2003 |
| | | GB 0426712 D0 | 12/01/2005 |
| | | GB 0426713 D0 | 12/01/2005 |
| | | GB 0513436 D0 | 10/08/2005 |
| | | GB 2393873 A | 07/04/2004 |
| | | GB 2393873 B | 18/05/2005 |
| | | GB 2406459 A | 30/03/2005 |
| | | GB 2406459 B | 28/09/2005 |
| | | GB 2406460 A | 30/03/2005 |
| | | GB 2406460 B | 19/10/2005 |
| | | GB 2413721 A | 02/11/2005 |
| | | GB 2413721 B | 22/11/2006 |
| | | HK 1073555 A1 | 20/01/2006 |
| | | HK 1073556 A1 | 13/01/2006 |
| | | HK 1082625 A1 | 23/02/2007 |
| | | HK 1095457 A1 | 11/03/2011 |
| | | HK 1095458 A1 | 11/12/2009 |
| | | JP 2004-129191 A | 22/04/2004 |
| | | JP 2006-191652 A | 20/07/2006 |
| | | JP 2008-182738 A | 07/08/2008 |
| | | JP 2008-182739 A | 07/08/2008 |
| | | JP 2008-182740 A | 07/08/2008 |
| | | JP 2008-182741 A | 07/08/2008 |
| | | JP 2008-182742 A | 07/08/2008 |
| | | JP 2008-182743 A | 07/08/2008 |
| | | JP 2008-182744 A | 07/08/2008 |
| | | JP 2008-182745 A | 07/08/2008 |
| | | JP 2008-182746 A | 07/08/2008 |
| | | JP 2008-182747 A | 07/08/2008 |
| | | JP 2008-182748 A | 07/08/2008 |
| | | JP 2009-135988 A | 18/06/2009 |
| | | JP 2009-135989 A | 18/06/2009 |
| | | JP 2009-135991 A | 18/06/2009 |
| | | JP 2009-135992 A | 18/06/2009 |
| | | JP 2009-135993 A | 18/06/2009 |
| | | JP 2009-135994 A | 18/06/2009 |
| | | JP 4020789 B2 | 12/12/2007 |
| | | JP 4216852 B2 | 28/01/2009 |
| | | JP 4625100 B2 | 02/02/2011 |
| | | JP 4625101 B2 | 02/02/2011 |
| | | JP 4625102 B2 | 02/02/2011 |

Form PCT/ISA/210 (patent family annex) (July 2009)

INTERNATIONAL SEARCH REPORT
Information on patent family members

International application No.

**PCT/KR2013/003142**

| Patent document cited in search report | Publication date | Patent family member | Publication date |
|---|---|---|---|
| | | JP 4625103 B2 | 02/02/2011 |
| | | JP 4625104 B2 | 02/02/2011 |
| | | JP 4625131 B2 | 02/02/2011 |
| | | JP 4625132 B2 | 02/02/2011 |
| | | JP 4709241 B2 | 22/06/2011 |
| | | JP 4709242 B2 | 22/06/2011 |
| | | JP 4709291 B2 | 22/06/2011 |
| | | JP 4709292 B2 | 22/06/2011 |
| | | KR 10-0494828 B1 | 17/06/2005 |
| | | KR 10-0494829 B1 | 13/06/2005 |
| | | KR 10-0494831 B1 | 17/06/2005 |
| | | KR 10-0506864 B1 | 05/08/2005 |
| | | KR 10-2004-0031556 A | 13/04/2004 |
| | | NL 1022333 A1 | 06/04/2004 |
| | | NL 1022333 C2 | 25/07/2005 |
| | | NL 1029485 A1 | 07/10/2005 |
| | | NL 1029485 C2 | 23/05/2006 |
| | | NL 1029486 A1 | 07/10/2005 |
| | | NL 1029486 C2 | 23/05/2006 |
| | | PT 1406453 E | 31/05/2007 |
| | | PT 1603344 E | 14/02/2011 |
| | | PT 1796396 E | 14/02/2011 |
| | | PT 1809048 E | 28/12/2010 |
| | | PT 1821547 E | 14/02/2011 |
| | | PT 2003899 E | 28/12/2010 |
| | | PT 2003900 E | 29/12/2010 |
| | | PT 2009927 E | 29/12/2010 |
| | | PT 2009928 E | 29/12/2010 |
| | | PT 2015585 E | 28/12/2010 |
| | | SI 1603344 T1 | 29/04/2011 |
| | | SI 1796396 T1 | 29/04/2011 |
| | | SI 1809048 T1 | 28/02/2011 |
| | | SI 1821547 T1 | 29/04/2011 |
| | | SI 2003899 T1 | 28/02/2011 |
| | | SI 2003900 T1 | 31/03/2011 |
| | | SI 2009927 T1 | 31/03/2011 |
| | | SI 2009928 T1 | 28/02/2011 |
| | | SI 2015585 T1 | 29/04/2011 |
| | | TW I229825 A | 21/03/2005 |
| | | TW I229825 B | 21/03/2005 |
| | | US 2005-129118 A1 | 16/06/2005 |
| | | US 2005-129119 A1 | 16/06/2005 |
| | | US 2005-129120 A1 | 16/06/2005 |
| | | US 2008-031332 A1 | 07/02/2008 |
| | | US 2008-031341 A1 | 07/02/2008 |
| | | US 2008-031342 A1 | 07/02/2008 |
| | | US 2008-031343 A1 | 07/02/2008 |
| | | US 2008-037639 A1 | 14/02/2008 |
| | | US 2008-037640 A1 | 14/02/2008 |
| | | US 2008-037644 A1 | 14/02/2008 |

Form PCT/ISA/210 (patent family annex) (July 2009)

INTERNATIONAL SEARCH REPORT
Information on patent family members

International application No.

**PCT/KR2013/003142**

| Patent document cited in search report | Publication date | Patent family member | Publication date |
|---|---|---|---|
| | | US 2009-067497 A1 | 12/03/2009 |
| | | US 2009-067498 A1 | 12/03/2009 |
| | | US 2009-067499 A1 | 12/03/2009 |
| | | US 2009-067500 A1 | 12/03/2009 |
| | | US 2009-074062 A1 | 19/03/2009 |
| | | US 2009-074063 A1 | 19/03/2009 |
| | | US 2009-074064 A1 | 19/03/2009 |
| | | US 2009-074065 A1 | 19/03/2009 |
| | | US 2009-074066 A1 | 19/03/2009 |
| | | US 2009-074067 A1 | 19/03/2009 |
| | | US 2009-074068 A1 | 19/03/2009 |
| | | US 2009-074069 A1 | 19/03/2009 |
| | | US 7233621 B2 | 19/06/2007 |
| | | US 7570691 B2 | 04/08/2009 |
| | | US 7606307 B2 | 20/10/2009 |
| | | US 7627035 B2 | 01/12/2009 |
| | | US 8345757 B2 | 01/01/2013 |
| | | US 8345758 B2 | 01/01/2013 |
| | | US 8351503 B2 | 08/01/2013 |
| | | US 8351504 B2 | 08/01/2013 |
| | | US 8351505 B2 | 08/01/2013 |
| | | US 8351506 B2 | 08/01/2013 |
| | | US 8351507 B2 | 08/01/2013 |
| | | US 8385417 B2 | 26/02/2013 |
| | | US 8396128 B2 | 12/03/2013 |
| US 2012-0027088 A1 | 02/02/2012 | CA 2805883 A1 | 02/02/2012 |
| | | CN 103026709 A | 03/04/2013 |
| | | CN 103039074 A | 10/04/2013 |
| | | EP 2599312 A2 | 05/06/2013 |
| | | EP 2599313 A2 | 05/06/2013 |
| | | KR 10-2013-0036772 A | 12/04/2013 |
| | | TW 201215162 A | 01/04/2012 |
| | | TW 201223286 A | 01/06/2012 |
| | | US 2012-0027089 A1 | 02/02/2012 |
| | | US 2012-0121017 A1 | 17/05/2012 |
| | | WO 2012-015649 A2 | 02/02/2012 |
| | | WO 2012-015649 A3 | 22/03/2012 |
| | | WO 2012-015650 A2 | 02/02/2012 |
| | | WO 2012-015650 A3 | 22/03/2012 |
| | | WO 2012-015650 A8 | 28/02/2013 |
| | | WO 2012-067966 A1 | 24/05/2012 |

Form PCT/ISA/210 (patent family annex) (July 2009)